# FASCICULE DE BREVET EUROPEEN

(11) **EP 3 408 973 B1**
(45) Date de publication et mention de la délivrance du brevet: **26.10.2022**
(21) Numéro de dépôt: 17706558.8
(22) Date de dépôt: 23.01.2017
(51) Int. Cl.: H04L 12/28

(54) **PROCÉDÉ DE CONFIGURATION, DE CONTRÔLE OU DE SUPERVISION D'UNE INSTALLATION DOMOTIQUE**
VERFAHREN ZUR KONFIGURATION, STEUERUNG ODER ÜBERWACHUNG EINER HEIMAUTOMATIONSANLAGE
METHOD FOR CONFIGURING, CONTROLLING OR MONITORING HOME AUTOMATION EQUIPMENT

(30) Priorité: 28.01.2016 FR 1650690
(43) Date de publication de la demande: 05.12.2018
(73) Titulaire: Overkiz, 74370 Metz-Tessi (FR)
(72) Inventeur: POGNANT, Sylvain, 74600 Seynod (FR); PELLARIN, Florent, 74960 Meythet (FR)
(74) Mandataire: Germain Maureau
(86) Numéro de dépôt international: PCT/FR2017/050134
(87) Numéro de publication internationale: WO 2017/129885

(56) Documents cités:
- WO-A1-2009/080398
- US-A1- 2003 061 380
- Echonet Consortium: "-i - ECHONET Lite SPECIFICATION II ECHONET Lite Communication Middleware Specification", , 3 septembre 2012 (2012-09-03), pages 1-52, XP055112237, Extrait de l'Internet: URL:http://www.echonet.gr.jp/english/spec/ pdf_v100_lite_e/SpecLiteVer.1.0_e_02.pdf [extrait le 2014-04-04]

## Description

### Domaine de l'invention

La présente invention concerne un procédé de configuration, un procédé de découverte et un procédé de contrôle ou de supervision d'une installation domotique.

### Art antérieur

Une installation domotique d'un bâtiment peut comprendre une pluralité de dispositifs domotiques. Il est connu de procéder à la configuration, et au contrôle, c'est à dire à la commande et/ou à la supervision de ladite installation en utilisant une unité centrale de commande qui communique avec un ou plusieurs dispositifs domotiques.

Dans une telle installation, certains dispositifs domotiques communiquent selon un premier type de protocole, notamment un protocole local de type protocole domotique, par exemple un protocole propriétaire n'utilisant pas un adressage IP.

D'autres équipements ou d'autres dispositifs domotiques dans la même installation peuvent communiquer selon des protocoles de communication cibles d'un second type, notamment dans un protocole de communication au dessus du protocole IP, ou un protocole point à point générique, par exemple Bluetooth.

La présence de différents protocoles de communication ne permet pas une communication facile entre les dispositifs ou oblige à prévoir l'implémentation de plusieurs protocoles de communication sur les dispositifs et les équipements pour permettre leur communication, ce qui augmente le coût et/ou la complexité de la programmation de ceux-ci.

Le document us2003061380 concerne des appareils électroniques domestiques numériques qui peuvent potentiellement recevoir des commandes dangereuses, mais qui peuvent être utilisés en toute sécurité en rejetant les commandes d'utilisateurs malveillants.

Le document « Echonet Consortium ECHONET Lite SPECIFICATION II ECHONET Lite communication Middleware Spécification » dans sa version datée du 03/09/2012 concerne les spécifications du protocole Echonet Lite.

Le document WO2009080398 concerne le contrôle d'appareils domestiques connectés à un réseau local, tels que des enregistreurs vidéo personnels, une télévision, des machines à laver, etc., à partir d'un terminal dit de point de contrôle ayant une connectivité de données avec ledit réseau local.

La présente invention a pour but de résoudre tout ou partie des inconvénients mentionnés ci-dessus.

### Exposé de l'invention

A cet effet, la présente invention concerne un procédé de configuration d'une installation domotique comprenant au moins un dispositif domotique et au moins une unité centrale de commande, l'au moins un dispositif domotique étant susceptible de communiquer avec l'unité centrale de commande par l'intermédiaire d'au moins un premier protocole local ; le procédé étant exécuté par l'au moins une unité centrale de commande et comprenant les étapes suivantes :
- Réception d'au moins un message de configuration relatif à un identifiant de localisation d'au moins un dispositif domotique selon le premier protocole de communication local et à
   ∘ au moins une définition d'une fonction ou d'un groupe de fonctions de l'au moins un dispositif domotique selon ledit premier protocole de communication
- Obtention d'un identifiant de localisation correspondant à une adresse réseau de l'au moins un dispositif domotique selon un second protocole de communication cible tel que l'identifiant de localisation est distinct pour chaque dispositif domotique ;
- Enregistrement de la correspondance entre l'identifiant de localisation de l'au moins un dispositif domotique selon le premier protocole de communication et l'identifiant de localisation de l'au moins un dispositif domotique selon le second protocole de communication ;
- Enregistrement de l'au moins une définition d'une fonction ou d'un groupe de fonctions de l'au moins un dispositif domotique ; et/ou d'une règle de conversion de fonction agencée pour convertir la définition de l'au moins une fonction ou groupe de fonction selon le premier protocole de communication en au moins une définition d'une fonction ou d'un groupe de fonction selon le second protocole de communication cible.

Grâce aux dispositions selon l'invention, il est possible de mettre en place une publication d'un identifiant de localisation, selon le second protocole cible de communication pour des dispositif domotiques qui ne sont capables de communiquer que selon un premier protocole local ou propriétaire, sans avoir à apporter de modifications sur cet au moins un dispositif, et ainsi de mettre en relation cet au moins un dispositif avec d'autres nœuds d'un réseau défini selon le second protocole de communication.

Une fois les étapes du procédé de configuration réalisées, le dispositif domotique est virtualisé. L'unité centrale de commande peut agir pour le compte du dispositif domotique sur le réseau selon le deuxième protocole de communication.

Il est ainsi possible de présenter des fonctions/commandes ou des variables d'état de l'au moins un dispositif pour un contrôle selon le second protocole. Les fonctions/commande peuvent être traduites entre le premier protocole de communication et le second protocole de communication par les règles de conversion. A titre d'exemple, dans un premier protocole du type IO Homecontrol, pour le pilotage de la motorisation d'un dispositif domotique de type volet roulant ou protection solaire, des commandes correspondant à des actions du type montée et descente sont définies, alors que dans un deuxième protocole au dessus du protocole IP, seuls des statuts ouvert et fermé peuvent être présentés.

La définition de l'au moins une fonction ou de l'au moins une variable d'état peut être explicite ou déterminée à partir d'au moins une définition d'un type selon ledit premier protocole de communication de l'au moins un dispositif domotique qui peut être déterminé à partir du message de configuration ou à partir d'un groupe de fonctions connu selon le protocole considéré (« function cluster »).

Selon une possibilité, chaque dispositif domotique est identifié par un identifiant de localisation, comme s'il pouvait lui-même assurer une communication. Plusieurs dispositifs distincts ont donc des identifiants de localisation distincts selon le deuxième protocole. L'unité centrale de commande reçoit les messages adressés à ces identifiants et est en mesure d'en assurer le traitement et/ou le routage jusqu'au dispositif, en utilisant les règles de conversion pour communiquer un message converti selon le premier protocole local.

Selon une autre possibilité, un groupe de dispositif est identifié par un même identifiant selon le deuxième protocole. Ces dispositions permettent d'envisager une configuration d'un groupe de dispositif commandable comme un seul dispositif, de façon performante par un seul appel de fonction.

Selon une variante, le procédé comprend une pluralité de correspondance entre un dispositif communiquant selon le premier protocole de communication et des identifiants de localisation selon plusieurs deuxièmes procédés de commande. Ces dispositions permettent de virtualiser le dispositif pour le faire communiquer selon plusieurs deuxièmes protocoles cibles.

Selon une variante, l'unité centrale de commande envoie un message d'inscription à destination d'un dispositif domotique afin de s'abonner à des notifications relatives à au moins une variable d'état d'au moins un dispositif domotique. Ainsi des notifications concernant les variables d'état seront communiquées à l'unité centrale de commande dans le cadre d'un procédé de supervision.

Au sens de la présente invention, un premier protocole local est un protocole de communication local, notamment un protocole local non IP, par exemple un protocole domotique, notamment un protocole domotique de type propriétaire. Il peut y avoir plusieurs protocoles locaux. A titre d'exemple, les protocoles RTS ou IO Homecontrol peuvent constituer un premier protocole local.

Au sens de la présente invention, un deuxième protocole cible est par exemple un protocole de communication au dessus du protocole IP sur un réseau local ou un protocole générique permettant une communication point à point. A titre d'exemple, le protocole applicatif WEAVE utilisant des protocoles de transport 6lowpan et thread pour un réseau maillé peuvent constituer un deuxième protocole cible.

Selon un aspect de l'invention, le deuxième protocole cible est un protocole au dessus du protocole IP.

Au sens de la présente invention, un réseau de transport est un réseau de mise en relation entre l'au moins un dispositif et l'unité centrale de commande par le deuxième protocole. Ce réseau permet le transport et l'adressage.

Au sens de la présente invention, un nœud est un équipement présent sur un réseau utilisant le deuxième protocole de communication qui possède une identifiant de localisation unique sur le réseau considéré, correspondant par exemple à l'installation domotique.

Au sens de la présente invention, un identifiant de localisation est un identifiant unique dans le réseau local considéré, correspondant par exemple à l'installation domotique. Dans le cas du premier protocole de communication local, il est notamment possible d'utiliser une adresse dans un format propriétaire correspondant au protocole domotique utilisé. Dans le cas du deuxième protocole cible, un identifiant de localisation peut notamment être une adresse réseau, comme par exemple une adresse IPv4 ou IPv6 ou une adresse bluetooth, ou encore une composition d'une adresse réseau et d'un identifiant de resource indiqué par un chemin d'accès, par exemple sous la forme de l'URL suivante :
<protocol>://<host address>[:<port>]/<resource path>

Au sens de la présente invention, un dispositif domotique est un équipement domotique et/ou un capteur, ou encore une partie d'équipement domotique ou une partie de capteur correspondant à un sous-ensemble fonctionnel. Un dispositif domotique peut également correspondre à un point de commande d'autres dispositifs domotiques.

Au sens de la présente invention, un message est un élément d'information notifié ou réceptionné via un module de communication depuis un équipement extérieur, ou sous la forme d'un appel synchrone ou asynchrone, pouvant également correspondre à un appel de fonction local ou distant.

Au sens de la présente invention, une installation est un ensemble comprenant une pluralité de dispositifs domotiques et au moins une unité centrale de commande disposés dans un seul bâtiment ou sur une pluralité de lieux, chaque dispositif domotique étant relié à une unité centrale de commande parmi la pluralité d'unités centrales de commande, la pluralité d'unités centrales de commande formant un groupe sous le contrôle d'un utilisateur. Les dispositifs électroniques forment des groupes d'au moins un dispositif domotique rattaché à une unité centrale de commande.

Au sens de la présente invention, une unité centrale de commande de l'installation domotique est une unité électronique comprenant :
- au moins une unité de traitement pour contenir et exécuter au moins un programme d'ordinateur,
- au moins un module de communication destinée au contrôle et/ou à la commande d'au moins un dispositif domotique ; alternativement l'unité électronique peut être intégrée à un dispositif domotique ; et
- au moins un module de communication avec l'unité de gestion.

Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API.

Il est également possible que l'unité centrale de commande soit intégrée à un routeur et/ou à un modem réalisant une connexion à un réseau étendu, notamment à Internet.

Au sens de la présente invention, une variable d'état est un élément descriptif de l'état d'un dispositif domotique. La valeur d'une variable d'état peut correspondre à la marche ou à l'arrêt pour un interrupteur, ou à un degré ou pourcentage d'ouverture pour un volet. Par ailleurs, une variable d'état peut correspondre à une valeur de mesure d'un capteur, par exemple à une valeur d'une grandeur physique ou d'environnement. La description des états des dispositifs peut être générique ou spécialisée, en fonction du protocole local. Les identifiants des variables d'état peuvent être numériques ou alphanumériques. Les valeurs des variables d'états peuvent utiliser des formats ou des échelles personnalisées ou propriétaires.

Au sens de la présente invention, une commande/fonction correspond à un ordre pouvant être donné à un dispositif domotique en vue de la réalisation d'une action par ce dispositif ou de l'obtention en retour d'une information, par exemple d'une information relative à une variable d'état de ce dispositif.

Selon une possibilité, le procédé comprend une pluralité d'étapes de réception de messages de configuration correspondant à une pluralité de premiers protocoles de communication.

Selon une possibilité, le procédé comprend une pluralité d'étapes d'émission de message de découverte selon une pluralité de premiers protocoles de communication.

Selon un mode de mise en œuvre, l'étape d'obtention de l'identifiant de localisation correspond à une réception d'une saisie par l'utilisateur d'un identifiant de localisation selon le deuxième protocole de communication.

Selon un mode de mise en œuvre, l'étape de réception d'un message de configuration comprend une déclaration par l'utilisateur de l'identifiant de localisation selon le premier protocole de communication et/ou une déclaration par l'utilisateur d'au moins une fonction ou d'un type de dispositif selon le premier protocole de communication.

Selon un mode de mise en œuvre, le procédé comprend en outre l'étape suivante :
- Obtention d'au moins une règle de conversion de fonction agencée pour convertir la définition de l'au moins une fonction selon le premier protocole de communication en au moins une définition d'une fonction selon le second protocole de communication cible et/ou d'une règle de conversion d'état agencée pour convertir la définition de l'au moins une variable d'état selon le premier protocole de communication en au moins une définition d'une variable d'état selon le second protocole de communication cible.
- Enregistrement de l'au moins une règle de conversion de fonction et/ou de l'au moins une règle de conversion d'état.

Selon un mode de réalisation, l'étape d'obtention comprend une étape de téléchargement de règles de conversion en provenance d'un serveur ou d'une unité de gestion distante.

Selon un aspect de l'invention, l'étape de téléchargement peut intervenir lorsque l'au moins une règle de conversion concernée n'est pas disponible localement sur l'unité centrale de commande.

Selon un mode de mise en œuvre, le procédé comprend en outre l'étape suivante :
- définition d'une action à réaliser au moins partiellement par l'unité centrale de commande en correspondance avec une fonction selon le deuxième protocole correspondant à un identifiant de localisation ;

Ces dispositions permettent de procéder à un ajout de fonction ou à une simulation de fonction, lorsque le dispositif domotique correspondant à l'identifiant considéré n'est pas en mesure de fournir la commande demandée.

Selon un mode de mise en œuvre, l'étape de conversion comprend la limitation de la fonction demandée ou l'interdiction d'une commande/fonction à réaliser.

Ces dispositions permettent notamment lors de la conversion d'opérer un bridage des plages de valeurs de commande ou d'interdire la réalisation de certaines commandes. Ces dispositions sont mises en œuvre au niveau de l'unité centrale de commande, sans modification nécessaire au niveau de l'équipement.

Selon un aspect de l'invention, le procédé de configuration peut être déclenché par la réception d'un message reçu par l'unité centrale de commande en provenance d'un terminal utilisateur.

Selon une variante, un appui sur un bouton de l'unité centrale de commande peut également permettre le déclenchement du procédé. Alternativement ou en complément, une action sur un dispositif domotique, comme un appui sur un bouton peut être considéré pour le déclenchement du procédé.

La présente invention concerne également un procédé de commande d'une installation domotique comprenant au moins un dispositif domotique et au moins une unité centrale de commande, l'au moins un dispositif domotique étant susceptible de communiquer avec l'unité centrale de commande par l'intermédiaire d'au moins un premier protocole local ; le procédé étant exécuté par l'au moins une unité centrale de commande et comprenant les étapes suivantes :
- Connexion entre un nœud communiquant selon un deuxième protocole de communication et l'unité centrale de commande, ladite unité centrale de commande agissant en tant que représentant virtuel de l'au moins un dispositif domotique selon le premier protocole ;
- Réception d'au moins un message de commande en provenance d'un nœud comprenant au moins un identifiant de localisation, correspondant à une adresse réseau, d'un dispositif domotique selon le deuxième protocole de communication cible, tel que l'identifiant de localisation est distinct pour chaque dispositif domotique, et au moins une définition d'une fonction du dispositif domotique selon le deuxième protocole de communication ;
- Détermination d'un identifiant de localisation de l'au moins un dispositif domotique selon le premier protocole de communication correspondant à l'identifiant de localisation de l'au moins un dispositif domotique selon le second protocole de communication
- Application d'une règle de conversion de fonction agencée pour convertir la définition de l'au moins une fonction selon le second protocole de communication cible en au moins une définition d'une fonction selon le premier protocole de communication local ;
- Envoi d'au moins un message de commande à destination de l'au moins un dispositif domotique correspondant à l'identifiant de localisation et à la fonction selon le premier protocole de communication local ;

Selon un aspect de l'invention, l'étape d'application d'une règle de conversion peut comprendre la réalisation d'étapes de traitements complémentaires à l'appel de la commande, notamment si une partie de la fonction ne peut pas être réalisée sur le dispositif domotique, et notamment un enrichissement partiel de la fonction.

A titre d'exemple, une planification d'une commande peut être prévue si le dispositif en lui-même ne permet pas une telle planification. Ainsi, il est possible d'implémenter sur l'unité centrale de commande une fonction de type « Calendar Weave » pour déclencher une commande d'ouverture le lundi à 8h00 pour un dispositif domotique de type store.

Egalement à titre d'exemple, une conversion de paramètre peut être réalisée par l'unité centrale de commande.

Selon un aspect de l'invention, préalablement à l'étape de réception d'un message de commande, une connexion peut être établie entre un nœud communiquant selon le deuxième protocole de communication et l'unité centrale de commande.

L'unité centrale de commande agit ainsi sur le réseau de communication selon le second protocole de communication en tant que représentant virtuel des dispositifs domotiques communiquant selon le premier protocole de communication local.

Selon un aspect de l'invention, le procédé de commande comprend en outre les étapes suivantes :
- Réception d'au moins un message de retour de commande en provenance de l'au moins un dispositif domotique selon le premier protocole local de communication ;
- Application d'une règle de conversion de fonction afin de convertir une information de retour de commande exprimée selon le premier protocole de communication local en une information de retour de commande exprimée selon le second protocole de communication cible ;
- Envoi d'au moins un message de retour de commande à destination de l'au moins un nœud communiquant selon un deuxième protocole de communication, le message de retour de commande comprenant une information de retour de commande selon le deuxième protocole cible de communication ;

La présente invention concerne également un procédé de supervision d'une installation domotique configurée par l'exécution du procédé de configuration ci-dessus, ledit procédé de supervision d'une installation domotique comprenant au moins un dispositif domotique et au moins une unité centrale de commande, l'au moins un dispositif domotique étant susceptible de communiquer avec l'unité centrale de commande par l'intermédiaire d'au moins un premier protocole local ; le procédé étant exécuté par l'au moins une unité centrale de commande et comprenant les étapes suivantes :
- Réception d'un message de supervision en provenance d'un dispositif domotique comprenant une information relative à une valeur d'au moins un variable d'état de l'au moins un dispositif domotique selon ledit premier protocole de communication ;
- Application d'une règle de conversion d'état afin de convertir l'au moins une information relative à une valeur d'au moins un variable d'état de l'au moins un dispositif domotique exprimée selon le premier protocole de communication local en une valeur d'au moins un variable d'état de l'au moins un dispositif domotique exprimée selon le second protocole de communication cible ;
- Adaptation de l'identifiant de localisation de l'au moins un dispositif domotique selon le premier protocole de communication en un identifiant de localisation, correspondant à une adresse réseau, de l'au moins un dispositif domotique selon le deuxième protocole de communication cible tel quel l'identifiant de localisation est distinct pour chaque dispositif domotique ;
- Envoi d'au moins un message de supervision à destination d'au moins un nœud communiquant selon un deuxième protocole de communication, le message de supervision comprenant une information relative à une valeur d'au moins un variable d'état de l'au moins un dispositif domotique selon le deuxième protocole cible de communication et en relation avec l'identifiant de localisation de l'au moins un dispositif domotique selon le deuxième protocole de communication ;

Selon un aspect de l'invention, les étapes d'application d'une règle de conversion et d'adaptation d'adresse peuvent être réalisées séquentiellement dans un ordre indifférent ou simultanément.

Selon une possibilité, l'envoi du message de supervision peut être réalisé à l'initiative de l'unité centrale de commande de façon spontanée ou suite à la réception d'un message de supervision en provenance d'un dispositif domotique.

Selon une autre possibilité, le message de supervision peut être envoyé suite à la réception par l'unité centrale de commande d'un message de requête en provenance d'un nœud communiquant selon le deuxième protocole de communication. Selon cette deuxième possibilité, l'unité centrale de commande comprend un espace ou base de stockage des valeurs de variables d'état pour les dispositifs domotiques qui lui sont rattachés

Selon une variante, l'unité centrale de commande consulte périodiquement les valeurs de variables d'état des dispositifs domotiques, détecte les modifications de valeurs de variables d'état en comparant une dernière valeur obtenue et au moins une valeur préalablement stockée. L'unité centrale envoie, en cas de modification, un message de supervision relatif à la valeur variable d'état modifiée à destination d'au moins un nœud communiquant selon le second protocole de communication.

Ces dispositions permettent de mettre en œuvre une émulation de mode événementiel pour un dispositif n'offrant pas une telle fonctionnalité.

Selon un aspect de l'invention, l'étape d'envoi est réalisée à destination d'au moins un nœud enregistré dans une liste de souscription à un évènement relatif à l'au moins une variable d'état.

Selon une variante, l'étape d'envoi peut être réalisée de façon indifférenciée à un ensemble de nœuds présents sur le réseau communiquant selon le deuxième protocole de communication. Cette disposition correspond à mode dit « Broadcast ».

Selon un aspect de l'invention, le procédé comprend une étape d'envoi à destination d'un dispositif domotique d'une demande d'enregistrement dans une liste de souscription à un évènement relatif à l'au moins une variable d'état du dispositif domotique.

Grâce à ces dispositions, le dispositif domotique envoie un message de supervision seulement aux nœuds inscrits sur le réseau établi selon le premier protocole de communication, et en particulier à l'unité centrale de commande.

Selon une variante, le dispositif domotique peut envoyer les messages de supervision de façon indifférenciée à un ensemble de nœud présent sur le réseau communiquant selon le premier protocole de communication. Cette disposition correspond à mode dit « Broadcast ».

Les différents aspects définis ci-dessus non incompatibles peuvent être combinés.

### Brève description des figures

L'invention sera mieux comprise à l'aide de la description détaillée qui est exposée ci-dessous en regard du dessin annexé dans lequel :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1, une deuxième installation domotique, ainsi qu'un serveur destiné à être connecté à un terminal utilisateur;
La figure 3 est un schéma représentant les relations entre une unité centrale de commande, des dispositifs de l'installation domotique communiquant selon un premier protocole de communication local et des nœuds réseaux communiquant selon un second protocole cible.
La figure 4 est un schéma illustrant un mode de mise en œuvre d'un procédé de configuration d'une installation domotique selon l'invention.
La figure 5 est un tableau de correspondance entre des fonctions, groupes de fonctions, variables d'états, groupes de variables d'états ou types exprimés selon le premier protocole de communication local et des fonctions, groupes de fonctions, variables d'états, groupes de variables d'états ou types exprimés selon le second protocole de communication cible.
La figure 6 est un tableau de nœuds identifiant les relations entre des identifiants de localisation exprimés selon le premier protocole de communication local et des identifiants de localisation exprimés selon le second protocole de communication cible.
La figure 7 est un schéma illustrant un premier mode de mise en œuvre d'un procédé de découverte d'une installation domotique selon l'invention.
La figure 8 est un schéma illustrant un deuxième mode de mise en œuvre d'un procédé de découverte d'une installation domotique selon l'invention.
La figure 9 est un schéma illustrant un mode de mise en œuvre d'un procédé de commande d'une installation domotique selon l'invention.
La figure 10 est un schéma illustrant un mode de mise en œuvre d'un procédé de supervision d'une installation domotique selon l'invention.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

### Description d'un système comprenant une installation domotique

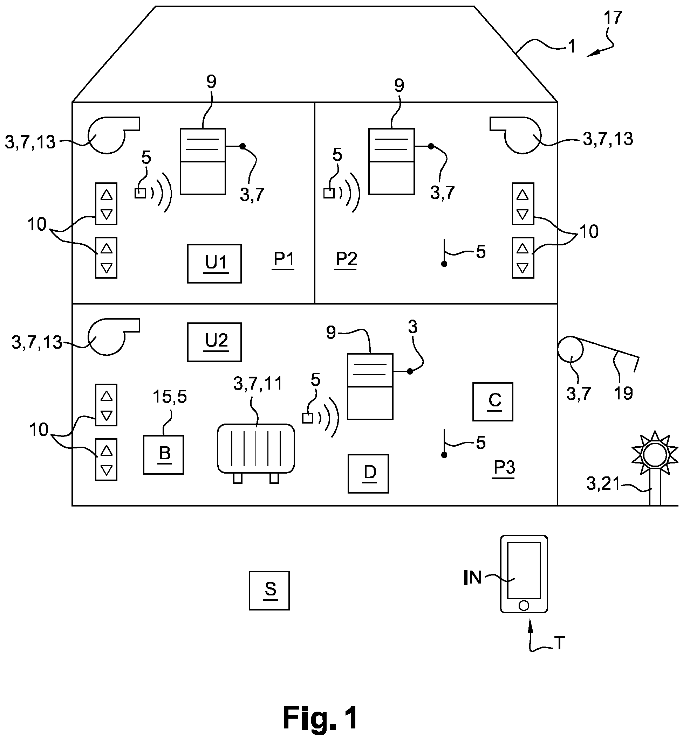

Comme illustré à la figure 1, un bâtiment 1 comprend à titre d'exemple trois pièces P1, P2, P3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique 17 peut également comprendre un point de commande 15 d'un actionneur 7, comme un boîtier de commande B sans fil pour le volet roulant 9.

L'installation domotique 17 peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique 17.

Les équipements domotiques 3 et les capteurs 5 peuvent ainsi avoir accès à toute grandeur physique mesurable, comme la température de chaque pièce P1, P2, P3 ou un état d'un élément du bâtiment 1, comme l'état d'ouverture d'un volet roulant 9, le statut d'une alarme, etc.

Par la suite nous utiliserons la désignation de dispositif domotique ou dispositif D indifféremment pour désigner des capteurs ou des équipements domotiques, ou encore des parties d'équipements domotiques 3 ou de capteurs 5.

L'installation domotique 17 comprend une pluralité d'unités centrales de commande Ul, U2. En particulier et à titre d'exemple, deux unités centrales de commande Ul, U2 sont représentées sur la figure 1. Selon une variante, une installation domotique peut comprendre également une unité centrale de commande unique.

Chaque unité centrale de commande Ul, U2 est agencée pour commander et/ou contrôler une partie des dispositifs D de l'installation 17 formant un groupe DGrU1, DGrU2. A titre d'exemple, sur la figure 1, l'unité centrale de commande Ul est en charge des dispositifs D disposés dans les pièces P1 et P2 du premier étage du bâtiment, alors que l'unité centrale de commande U2 est en charge des dispositifs D disposés dans la pièce P3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande Ul, U2 est agencée pour regrouper l'ensemble des données en provenance des dispositifs D de son groupe DGrU1, DGrU2 et pour traiter ces données.

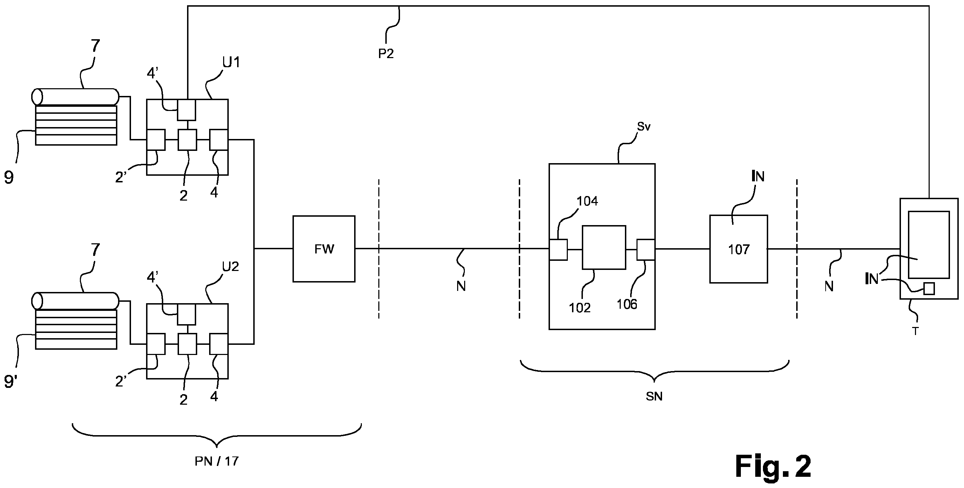

Comme cela est représenté sur la figure 2, chaque unité centrale de commande U est agencée pour communiquer avec un serveur Sv.

Les unités centrales de commande Ul, U2, U3 sont disposées sur un réseau privé PN, dont l'accès est en général protégé par un pare-feu FW. Le serveur Sv est également disposé sur un réseau privé SN. Le réseau privé PN est relié à un réseau étendu N, par exemple Internet. Bien entendu, le serveur Sv est agencé pour communiquer avec un ensemble de telles unités centrales de commande U. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'une mémoire vive, et d'une puce Ethernet.

L'unité centrale de commande U comprend, en outre, au moins un module de communication 2' destiné au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1, selon le premier protocole de communication local P1.

A titre d'exemple, le module de communication 2' peut être agencé pour mettre en œuvre par exemple un ou plusieurs des premiers protocoles locaux P1 par exemple de type Z-Wave, EnOcean, IO Homecontrol, Somfy RTS, KNX, MODBUS, Wavenis, Philips HUE. Ces premiers protocoles locaux sont des protocoles de communication locaux en général non IP.

Selon une autre possibilité, par exemple dans le cadre de systèmes d'alarme, l'unité centrale de commande peut être intégrée dans le dispositif domotique. Selon encore une autre possibilité, Il est également possible que l'unité centrale de commande soit intégrée à un routeur et/ou à un modem réalisant une connexion à un réseau étendu, notamment à Internet.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U comprend, en outre, un module de communication 4' pour communiquer selon un deuxième protocole de communication cible P2, avec un terminal de communication mobile T. Le deuxième protocole de communication cible peut par exemple être un protocole de communication au dessus du protocole IP sur un réseau local, ou encore un protocole générique point à point. A titre d'exemple, le protocole applicatif WEAVE utilisant des protocoles de transport 6lowpan et thread pour un réseau maillé peuvent constituer un deuxième protocole cible. D'autres exemple incluent Bluetooth, Zigbee ou Wifi.

Le terminal de communication T peut contenir et exécuter un logiciel d'application APP.

Chaque unité centrale de commande U comprend, en outre, un module de communication 4 avec le serveur Sv. Le serveur Sv permet la commande et/ou le contrôle à distance et comprend une ou plusieurs unités de traitement 102 agencée pour contenir et exécuter un deuxième programme d'ordinateur.

Dans certaines applications, une unité centrale de commande U peut communiquer avec le serveur Sv à travers un serveur intermédiaire, par exemple d'un fournisseur de service tiers, dont le serveur intermédiaire offre une interface de service ou API. Le serveur Sv comprend, de son côté, au moins une interface de communication 104 destinée à la communication avec l'unité centrale U.

Le serveur Sv peut comprendre également une interface de communication 106 destinée à la communication avec une interface de commande et/ou de contrôle IN permettant à un utilisateur de contrôler à distance l'installation domotique.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T communiquant par le réseau étendu N. Le terminal de communication mobile T peut être, par exemple, un téléphone intelligent ou une tablette. Le terminal de communication mobile T peut être le même ou un terminal du même type que celui avec lequel l'unité centrale de commande U communique en local au moyen du module de communication 4' selon le deuxième protocole P2 comme nous le détaillerons ultérieurement, ou un terminal différent. Nous désignerons indifféremment ces terminaux mobiles par la référence T.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

Les figures 1 et 2 décrivent une installation 17 qui comprend un ensemble de dispositifs D et une pluralité d'unités centrales de commande Ul, U2, disposées dans un même logement, un même bâtiment ou un même lieu physique.

### Réseau correspondant au protocole local et au protocole cible

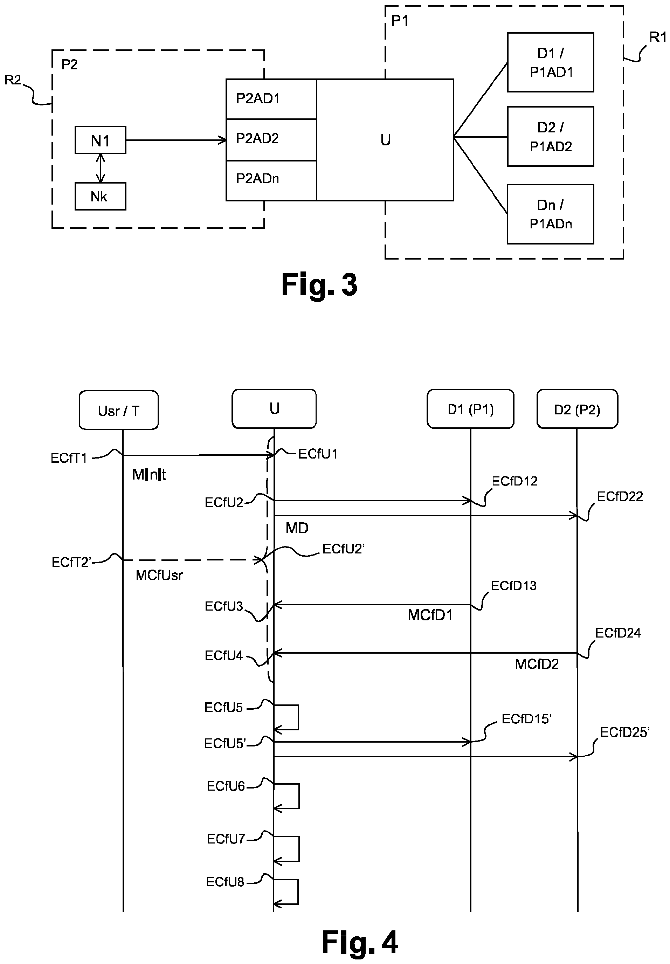

Comme cela est visible sur la figure 3, les dispositifs Dl, D2, Dn faisant partie d'un groupe DGrU appartiennent à un réseau local R1 géré par une unité centrale de commande U au sein de l'installation domotique et communiquent selon un premier protocole de communication local P1 avec l'unité centrale de commande U. les dispositifs D1, D2, Dn possèdent un identifiant de localisation constitué par une adresse locale P1AD1, P1AD2, PlADn dans ce réseau. Les dispositifs logiques D1, D2, Dn peuvent être modélisés comme des nœuds ou points d'extrémité dans le réseau local.

D'autres dispositifs domotiques, terminaux utilisateurs T ou points de commandes peuvent être présents dans l'installation et être modélisés par des nœuds N d'un second réseau R2 et communiquer selon un second protocole de communication cible P2, notamment selon un protocole utilisant le protocole IP. On tend par nœud un équipement présent sur un réseau R2 utilisant le deuxième protocole de communication P2 et qui possède une identifiant de localisation unique sur le réseau R2.

L'unité centrale U est agencée pour présenter aux nœuds N1, Nk du réseau R2 communiquant selon le réseau R2 un ensemble d'identifiants de localisation P2AD1, P2AD2, P2ADn selon le deuxième protocole de communication cible P2 pour les dispositifs communiquant selon le premier protocole de communication local P1 et peut offrir une interface de découverte des dispositifs domotiques D1, D2, Dn détaillant le type, les fonctions et/ou les variables d'état des dispositifs, selon le deuxième protocole de communication P2.

### Procédé de configuration

### Premier mode de mise en œuvre

Nous allons à présent décrire un premier mode de réalisation d'un procédé de configuration d'une installation domotique 17 en référence à la figure 4, afin d'obtenir la configuration représentée sur la figure 3, le procédé étant exécuté par l'unité centrale de commande U. Seul deux dispositifs domotiques D1, D2 communiquant selon le premier protocole de communication local P1 sont représentés sur la figure 4. Toutefois, un seul dispositif domotique ou un nombre supérieur à deux de dispositifs domotiques peut également être considéré.

Dans une première étape EcfU1, le procédé de configuration peut être déclenché par la réception d'un message Mlnit reçu par l'unité centrale de commande U en provenance d'un terminal utilisateur Usr/T qui l'émet dans une étape EcfT1. Selon une variante, un appui sur un bouton de l'unité centrale de commande U peut également permettre le déclenchement du procédé. Alternativement ou en complément, une action sur un dispositif domotique, comme un appui sur un bouton peut être considéré.

Dans une étape ECfU2, l'unité centrale de commande U émet des messages de découverte MD à destination des dispositifs domotiques D1, D2 selon le premier protocole de communication P1, qui reçoivent ce message MD respectivement dans des étapes EcfD12 ou ECfD22.

Dans des étapes EcfU3, EcfU4, l'unité centrale de commande U reçoit des messages de configuration MCfD1, MCfD2 en provenance des dispositifs domotiques D1, D2 qui émettent ces messages respectivement dans des étapes ECfD12 et ECfD22.

Chacun de ces messages de configuration MCfD1, MCfD2 est relatif à un identifiant de localisation P1AD1, P1AD2 d'un dispositif domotique D1, D2 selon le premier protocole de communication local P1 et à :
∘ un type P2TD1, P2TD2 de l'au moins un dispositif domotique D1, D2 ; et/ou
∘ au moins une définition d'une fonction P1F1D1, P1F2D1, P1F1D2, P1F2D2 ou d'un groupe de fonctions de l'au moins un dispositif domotique D1, D2 selon ledit premier protocole de communication P1 et/ou
∘ au moins une définition d'une variable d'état P1S1D1, P1S2D1, P1S1D2, P1S2D2 ou d'un groupe de variables d'états de l'au moins un dispositif domotique D1, D2 selon ledit premier protocole de communication P1 ;

Dans une étape ECfU5, l'unité centrale de commande U obtient un identifiant de localisation P2AD1, P2AD2 pour chaque dispositif domotique D1, D2 selon un second protocole de communication cible P2. Les modes d'obtention de l'identifiant de localisation peuvent être multiples et sont détaillés ultérieurement.

Dans une étape Ecf6, l'unité de commande peut procéder à une vérification de l'existence d'au moins une règle de conversion de fonction RCFX agencée pour convertir la définition de l'au moins une fonction P1F1D1, P1F2D1, P1F1D2, P1F2D2 selon le premier protocole de communication P1 en au moins une définition d'une fonction P2F1D1, P2F2D1, P2F1D2, P2F2D2 selon le second protocole de communication cible P2 et/ou d'une règle de conversion d'état RCSX agencée pour convertir la définition de l'au moins une variable d'état P1S1D1, P1S2D1, P1S1D2, P1S2D2 selon le premier protocole de communication P1 en au moins une définition d'une variable d'état P2S1D1, P2S2D1, P2S1D2, P2S2D2 selon le second protocole de communication cible P2.

Cette vérification peut se baser sur le type de dispositif P2TD1, P2TD2, ou sur les définitions de fonctions, de groupes de fonctions et/ou sur les définitions de variables d'état ou de groupes de variables d'état. En effet, selon les protocoles utilisés, un type peut suffire à identifier les fonctions ou variables d'état supportées, comme par exemple dans le protocole IO homecontrol, ou des fonctions ou groupes de fonctions ou variables ou groupes de variables d'états doivent être listées, comme par exemple dans le protocole Zwave.

Alternativement, l'unité centrale de commande U peut identifier une correspondance entre un type P1TD1, P1TD2 de dispositif domotique selon le premier protocole de communication local P1 et un type P2TD1, P2TD2 de dispositif domotique selon le deuxième protocole de communication local P2.

Les règles de conversion peuvent être stockées dans une ou plusieurs tables de correspondance, comprises dans une base de connaissance.

Dans le cas où une telle règle de conversion n'est pas disponible, l'unité centrale de commande peut procéder à son obtention, par exemple en procédant à un téléchargement à partir du Serveur Sv. Par la suite la ou les règles de conversion peuvent être enregistrées dans une étape EcfU6.

La mise en place de la conversion d'une fonction peut également comprendre une étape de définition d'une action à réaliser au moins partiellement par l'unité centrale de commande en correspondance avec une fonction selon le deuxième protocole correspondant à un identifiant de localisation, ou encore la limitation de la fonction demandée ou l'interdiction d'une fonction à réaliser. Alternativement, les définitions correspondantes peuvent être prédéfinies dans la table de correspondance ou base de connaissance.

La conversion des fonctions ou variables d'état peut être alternativement mise en œuvre dans le cadre du procédé de commande et/ou de supervision.

Des exemples de conversion ou de réalisation partielle par l'unité centrale de commande sont donnés ultérieurement dans le cadre de la description du procédé de commande ou de supervision.

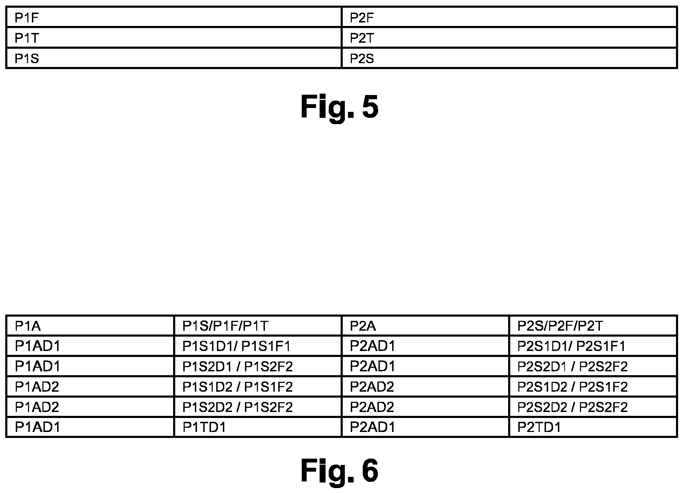

Dans une étape ECfU7, l'unité centrale de commande U enregistre la correspondance entre l'identifiant de localisation P1AD1, P1AD2 de l'au moins un dispositif domotique D1, D2 selon le premier protocole de communication et l'identifiant de localisation P2AD1, P2AD2 de l'au moins un dispositif domotique D1, D2 selon le second protocole de communication P2 dans une table de nœuds illustrée à la figure 6 ;

Dans une étape EcfU8, l'unité centrale U enregistre également dans la table de nœuds :
- l'au moins un type P2TD1, P2TD2 de l'au moins un dispositif domotique D1, D2 ; et/ou
- l'au moins une définition d'une fonction P1F1D1, P1F2D1, P1F1D2, P1F2D2 ou d'un groupe de fonctions de l'au moins un dispositif domotique D1, D2 et/ou de l'au moins une définition d'une variable d'état P1S1D1, P1S2D1, P1S1D2, P1S2D2 ou d'un groupe de variables d'états de l'au moins un dispositif domotique D1, D2 ;
- et/ou d'une règle de conversion de fonction RCFX agencée pour convertir la définition de l'au moins une fonction P1F1D1, P1F2D1, P1F1D2, P1F2D2 ou groupe de fonction selon le premier protocole de communication P1 en au moins une définition d'une fonction P2F1D1, P2F2D1, P2F1D2, P2F2D2 ou d'un groupe de fonction selon le second protocole de communication cible P2
- et/ou d'une règle de conversion d'état RCSX agencée pour convertir la définition de l'au moins une variable d'état P1S1D1, P1S2D1, P1S1D2, P1S2D2 selon le premier protocole de communication P1 en au moins une définition d'une variable d'état P2S1D1, P2S2D1, P2S1D2, P2S2D2 selon le second protocole de communication cible P2.

Une fois les étapes du procédé de configuration réalisées, le dispositif domotique D1 est virtualisé. L'unité centrale de commande U peut agir pour le compte de D1 sur le réseau R2.

### Variantes

Selon une variante, un groupe de dispositif peut être identifié par un même identifiant de localisation selon le deuxième protocole. La table de correspondance comprend dans ce cas plusieurs identifiant de localisation selon le premier protocole de communication qui correspondent au même identifiant de localisation selon le second protocole de communication. Ces dispositions permettent d'envisager une configuration d'un groupe de dispositif commandable comme un seul dispositif, de façon performante par un seul appel de fonction.

Selon une variante, le procédé comprend une pluralité d'étape de réception de messages de configuration correspondant à une pluralité de premiers protocoles de communication.

Selon une variante, le procédé comprend une pluralité d'étape d'émission de message de découverte selon une pluralité de premiers protocoles de communication.

Selon une variante, le procédé comprend une pluralité de correspondance entre un dispositif communiquant selon le premier protocole de communication et des identifiants de localisation selon plusieurs deuxièmes procédés de commande. Par exemple, les deuxièmes protocoles de communication cibles peuvent être les procédés Weave/thread et Bluetooth.

Selon une variante, en fonction du premier protocole de communication P1 considéré, il peut être nécessaire pour l'unité centrale de commande U d'envoyer un message d'inscription MI dans une étape ECfU5' afin de s'abonner à des notifications relatives à au moins une variable d'état d'au moins un dispositif domotique D1, D2, les dispositifs domotiques recevant ce message respectivement dans des étapes EcfD15', EcfD25'. Ainsi des notifications concernant les variables d'état seront communiquées à l'unité centrale de commande dans le cadre d'un procédé de supervision.

### Obtention d'un identifiant de localisation selon le second protocole de communication cible

L'obtention d'un identifiant de localisation selon le second protocole de communication cible, c'est-à-dire d'un identifiant unique dans le réseau local considéré va à présent être décrite selon deux mode de mise en œuvre.

Dans le cas du premier protocole de communication local, il est notamment possible d'utiliser comme identifiant de localisation une adresse dans un format propriétaire correspondant au protocole domotique utilisé.

Dans le cas du deuxième protocole cible, un identifiant de localisation peut notamment être une adresse réseau, comme par exemple une adresse IPv4 ou IPv6 ou une adresse bluetooth, ou encore une composition d'une adresse réseau et d'un identifiant de resource indiqué par un chemin d'accès, par exemple sous la forme de l'URL suivante :
<protocol>://<host address>[:<port>]/<resource path>

Nous décrivons ci-dessous deux modes de mise en œuvre dans lequel l'identifiant de localisation correspond respectivement à une adresse réseau ou à une combinaison d'une adresse réseau et d'une ressource.

Selon un premier mode de mise en œuvre, le second protocole de communication cible implique l'utilisation d'adresses réseau distinctes pour les dispositifs domotiques. L'identifiant de localisation correspond dans ce cas à une adresse réseau.

Selon une première possibilité l'adresse réseau est égale à, ou contient l'adresse physique du dispositif, comme par exemple dans le cas d'un protocole Bluetooth ou IPv6 Link-local. Dans ce cas, dans une première étape, l'unité centrale de commande U détermine une adresse physique unique pour le dispositif D1 à émuler.

Selon un premier exemple, dans le cas d'un protocole basé sur le protocole IP, l'unité centrale de commande U peut choisir une adresse MAC dans une plage acquise préalablement auprès de l'organisme d'enregistrement IEEE, l'adresse correspondant à une composition :
Company_id + suffixe libre

Dans laquelle :
- company_id correspond à un identifiant de constructeur par exemple sur 3 octets ;
- suffixe libre, correspond à un identifiant unique du dispositif D1 sur le réseau R2, par exemple sur 3 octets. Pour une unité centrale de commande U qui pourrait émuler jusqu'à 255 dispositifs domotiques, il suffit dans ce cas de faire varier le dernier octet pour identifier les dispositifs domotiques D.

Selon un deuxième exemple correspondant à une émulation selon le protocole Bluetooth, il est également possible de choisir une adresse dans une plage acquise préalablement comme cela a été décrit précédemment pour l'adresse MAC dans le cadre d'un protocole sur IP. De la même façon, pour une unité centrale de commande U qui pourrait émuler jusqu'à 255 dispositifs domotiques, il suffit de faire varier le dernier octet pour identifier les dispositifs domotiques D.

Dans une seconde étape, l'unité centrale de commande U détermine une adresse réseau unique à partir de l'adresse physique.

Selon certains deuxièmes protocoles cibles P2, l'adresse réseau correspond à l'adresse physique, par exemple dans le protocole Bluetooth. Selon d'autres deuxièmes protocoles cibles P2, l'adresse réseau est obtenue en appliquant une transformation injective à partir de l'adresse physique, comme par exemple dans le cas du protocole IPv6 Link-local, dans lequel l'adresse réseau est construite à partir de l'adresse MAC.

Selon une seconde possibilité, l'adresse réseau est obtenue d'un contrôleur de réseau sur présentation d'une adresse physique. A titre d'exemple, cela peut être le cas dans un protocole au dessus d'IP.

Selon cette seconde possibilité, dans une première étape, l'unité centrale de commande U détermine une adresse physique unique pour le dispositif D1 à émuler, de façon similaire à la première possibilité évoquée. Dans une seconde étape, l'unité centrale de commande U obtient une adresse réseau unique sur le réseau R2 auprès d'un contrôleur de réseau à partir de l'adresse physique. A titre d'exemple, le contrôleur réseau peut être un Serveur DHCP pour IPv4 ou IPv6.

Selon un second mode de mise en œuvre, l'adresse réseau peut être mutualisable pour plusieurs dispositifs domotiques D1, D2. Dans ce cas l'identifiant de localisation correspond à une composition d'une adresse réseau et d'un identifiant de resource indiqué par un chemin d'accès. Dans ce cas, il peut être suffisant d'obtenir une adresse réseau pour l'unité centrale de commande U.

Les différents dispositifs domotiques sont alors associés à des ressources différentes correspondant à des chemins d'accès distincts. A titre d'exemple, en considérant un protocole du type OIC/lotivity, en obtenant pour l'unité centrale de commande une adresse 192.168.0.2, il est possible d'affecter les identifiants de deux dispositifs de type éclairage de la façon suivante:
oc://192.168.0.2:1234/light/1
oc://192.168.0.2:1234/light/2

La ressource /light/1 est assignée au premier dispositif de type éclairage. La ressource /light/2 est assignée au deuxième dispositif de type éclairage.

### Variante

Selon une variante, l'étape d'obtention de l'identifiant de localisation peut correspondre à une réception d'une saisie par l'utilisateur d'un identifiant de localisation selon le deuxième protocole de communication comme cela est représenté sur la figure 4 par l'étape ECfU2'.

Selon une variante, l'étape de réception d'un message de configuration comprend une déclaration par l'utilisateur de l'identifiant de localisation selon le premier protocole de communication et/ou une déclaration par l'utilisateur d'au moins une fonction ou d'un type de dispositif selon le premier protocole de communication comme cela est représenté sur la figure 4 par l'étape ECfU2'.

### Procédé de découverte

### Premier mode de mise en œuvre

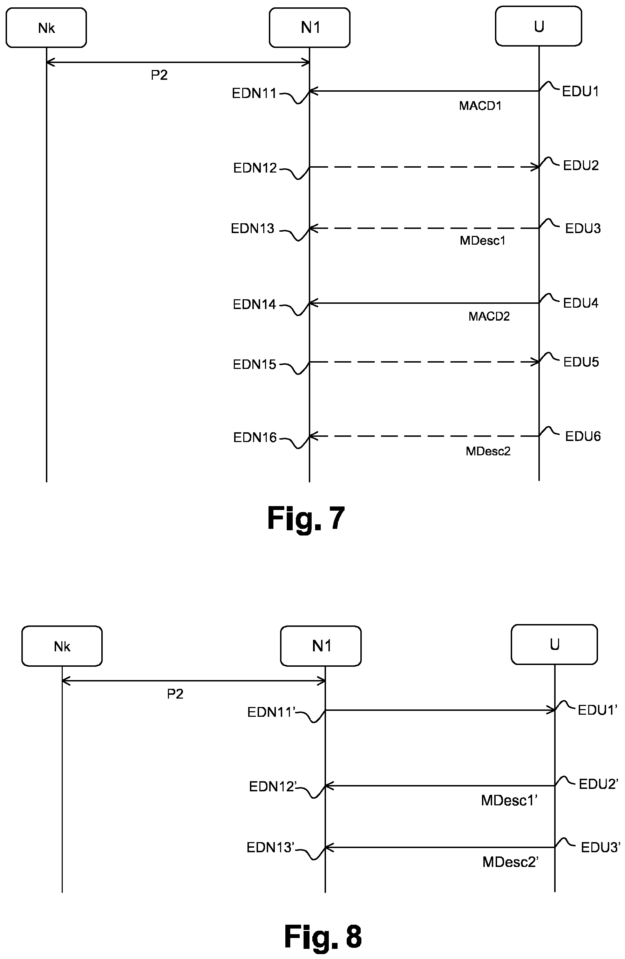

Nous allons à présent décrire un premier mode de réalisation d'un procédé de découverte d'une installation domotique 17 en référence à la figure 7. Nous supposerons ici que le procédé de configuration tel que décrit à la figure 4 a été précédemment exécuté, afin d'obtenir la configuration représentée sur la figure 3.

Le procédé est exécuté par l'unité centrale de commande U. Seul deux nœuds N1, Nk communiquant selon le deuxième protocole de communication cible P2 sur le réseau R2 sont représentés sur la figure 7. Toutefois, un seul nœud ou un nombre supérieur à deux de nœuds peut également être considéré.

Dans une étape EDU1, l'unité centrale de commande U envoie un message d'annonce de compatibilité MACD1 ou de déclaration d'existence en relation avec un identifiant de localisation P2AD1, d'un premier dispositif domotique D1 à destination d'au moins un nœud N1 communiquant selon le protocole de communication cible P2. L'identifiant de localisation localisation P2AD1 de l'au moins un dispositif domotique D1 selon le second protocole de communication P2 correspond à l'identifiant de P1AD1 du dispositif domotique D1 selon le premier protocole de communication P1. La correspondance entre les identifiants P1AD1 et P2AD1 est stockée dans une table de nœuds renseignée lors du procédé de configuration.

Par la suite, dans une étape EDU2, l'unité centrale de commande U reçoit un message de découverte MD, émis par un nœud selon le second protocole de communication P2 dans une étape EDN12.

Dans une étape EDU3, l'unité centrale envoie un message de description MDesc1 selon le deuxième protocole de communication cible P2 en relation avec un type P2TD1 du dispositif domotique D1 ou au moins une description d'une fonction P2F1D1, P2F2D1 ou d'un groupe de fonction selon le deuxième protocole de communication P2 et/ou d'au moins une variable d'état P2S1D1, P2S2D1 ou d'un groupe de variable d'état du dispositif domotique D1 selon le deuxième protocole de communication P2.

Les mêmes étapes EDU4 à EDU6, correspondantes aux étapes EDU1 à EDU3, sont répétées pour le deuxième dispositif domotique D2.

Ainsi, dans une étape EDU4, l'unité centrale envoie un message d'annonce de compatibilité MACD2 en relation avec un identifiant de localisation P2AD2 du deuxième dispositif domotique D2 à destination d'au moins un nœud N1 communiquant selon le protocole de communication cible P2. L'identifiant de localisation P1AD2 du dispositif domotique D2 selon le premier protocole de communication correspond à l'identifiant de localisation P2AD2 de l'au moins un dispositif domotique D2 selon le second protocole de communication P2. La correspondance entre les identifiants P1AD2 et P2AD2 est stockée dans une table de nœuds renseignée lors du procédé de configuration.

Par la suite, dans une étape EDU5, l'unité centrale de commande U reçoit un message de découverte MD, émis par un nœud selon le second protocole de communication P2 dans une étape EDN15.

Dans une étape EDU6, l'unité centrale envoi un message de description MDesc2 selon le deuxième protocole de communication cible P2 en relation avec un type P2TD2 du dispositif domotique D2 ou au moins une description d'une fonction P2F1D2, P2F2D2 selon le deuxième protocole de communication P2 et/ou d'au moins une variable d'état P2S1D2, P2S2D2 du dispositif domotique D2 selon le deuxième protocole de communication P2.

Ainsi, Une publication d'un identifiant de localisation selon le second protocole cible de communication est réalisée pour des dispositifs domotiques D1, D2 qui ne sont capables de communiquer que selon un premier protocole local ou propriétaire.

Selon une variante, le message d'annonce de compatibilité MACD1, MACD2 et le message de description MDesc1, MDesc2 peuvent être confondus et envoyés sans attendre la réception d'un message de découverte.

Selon une variante, le message d'annonce de compatibilité MACD1, MACD2 et/ou le message de description MDesc1, MDesc2 peuvent être envoyés de façon périodiques aux nœuds du réseau R2.

### Deuxième mode de mise en œuvre

Selon une variante du procédé de découverte décrit sur la figure 8, l'unité centrale de commande attend dans une étape EDU1' la réception d'un message de découverte MD' selon le second protocole de communication P2 émis par un nœud N1 dans une étape EDN11' pour envoyer un premier message d'annonce de compatibilité et de description MDesc1' dans une étape EDU2' selon un deuxième protocole de communication cible P2 en relation avec l'identifiant de localisation P1AD1 du premier dispositif domotique Dl et comprenant :
- un type P2TD1 du dispositif domotique D1 ou
- au moins une description d'une fonction P2F1D1, P2F2D1 selon le deuxième protocole de communication P2 et/ou
- au moins une description d'une variable d'état P2S1D1, P2S2D1 du dispositif domotique D1 selon le deuxième protocole de communication P2.

De la même façon, l'unité centrale de commande envoie dans une étape EDU3' un deuxième message d'annonce de compatibilité et de description MDesc2' selon le deuxième protocole de communication cible P2 en relation avec l'identifiant de localisation P1AD2 du premier dispositif domotique D2 et comprenant :
- un type P2TD2 du dispositif domotique D2 ou
- au moins une description d'une fonction P2F1D2, P2F2D2 selon le deuxième protocole de communication P2 et/ou
d'au moins une variable d'état P2S1D1, P2S2D1 du dispositif domotique D1 selon le deuxième protocole de communication P2.

Dans ce mode de mise en œuvre, les messages d'annonce de compatibilité et de description sont confondus. Ils peuvent également être distincts comme dans le premier mode de mise en œuvre.

### Variante

Selon une variante, l'unité centrale de commande U peut vérifier périodiquement la disponibilité des dispositifs domotiques et n'envoyer des messages de description et/ou de déclaration d'existence qu'en cas de disponibilité du dispositif domotique concerné.

### Procédé de commande

### Premier mode de mise en œuvre

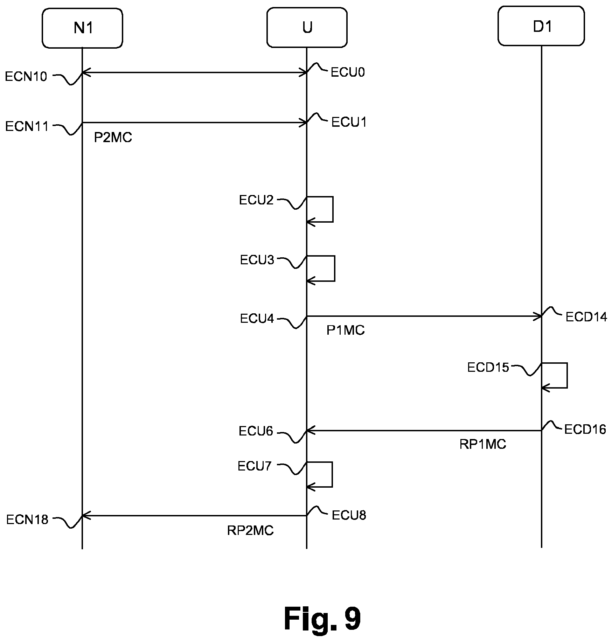

Nous allons à présent décrire un premier mode de réalisation d'un procédé de commande d'une installation domotique 17 en référence à la figure 9. Nous supposerons ici que le procédé de configuration tel que décrit à la figure 4 a été précédemment exécuté, afin d'obtenir la configuration représentée sur la figure 3. Nous supposerons qu'un procédé de découverte tel que décrit à la figure 7 ou à la figure 8 a égalemenet été exécuté.

Le procédé de commande est exécuté par l'unité centrale de commande U. Seul un nœud N1 communiquant selon le deuxième protocole de communication cible P2 sur le réseau R2 est représentés sur la figure 9. Toutefois, un seul nœud ou un nombre supérieur à deux de nœuds peut également être considéré. De la même façon, seul un dispositif domotique D1 communiquant selon le premier protocole local P1 est représenté mais d'autres dispositifs peuvent être présents.

Dans une étape préalable optionnelle ECU0, une connexion peut être établie entre le nœud entre un nœud N1 communiquant selon le deuxième protocole de communication P2 et l'unité centrale de commande U, l'unité centrale de commande U agissant sur le réseau R2 en tant que représentant virtuel des dispositifs domotiques du réseau R1 communiquant selon le premier protocole de communication local P1.

Dans une première étape ECU1, l'unité centrale de commande U reçoit au moins un message de commande P2MC en provenance d'un nœud N1 communiquant selon le deuxième protocole de communication P2. Le message de commande P2MC qui est émis par le nœud N1 dans une étape ECN11 comprend au moins un identifiant de localisation P2AD1 d'un dispositif domotique D1 selon le deuxième protocole de communication cible P2 et au moins une définition d'une fonction P2F1D1 du dispositif domotique D1 selon le deuxième protocole de communication P2. Dans le cas présent, nous supposerons que le dispositif concerné par la commande est le dispositif D1 identifié par l'identifiant de localisation P2AD1, que la fonction concernée est une fonction P2F1D1 destinée à ce seul dispositif domotique.

Dans une étape ECU2, l'unité centrale de commande U détermine un identifiant de localisation P1AD1 du dispositif domotique D1 selon le premier protocole de communication correspondant à l'identifiant de localisation P2AD1 de l'au moins un dispositif domotique D1 selon le second protocole de communication P2 reçu dans le message de commande P2MC.

Dans une étape ECU3, l'unité centrale de commande applique une règle de conversion de fonction RCFX agencée pour convertir la définition de la fonction P2F1D1 selon le second protocole de communication cible P2 en au moins une définition d'une fonction P1F1D1 selon le premier protocole de communication local P1. Pour cela, l'unité centrale de commande U peut utiliser la table de correspondance renseignée lors du procédé de configuration.

L'étape d'application d'une règle de conversion peut comprendre la réalisation d'étapes de traitements complémentaires à l'appel de la commande, notamment si une partie de la fonction ne peut pas être réalisée sur le dispositif domotique, et notamment un enrichissement partiel de la fonction, ou encore la limitation de la fonction demandée ou l'interdiction d'une fonction à réaliser.

A titre d'exemple, une planification d'une commande peut être prévue si le dispositif en lui-même ne permet pas une telle planification. Ainsi, il est possible d'implémenter sur l'unité centrale de commande une fonction de type « Calendar Weave » pour déclencher une commande d'ouverture le lundi à 8h00 pour un dispositif domotique de type store. Egalement à titre d'exemple, une conversion de paramètre peut être réalisée par l'unité centrale de commande. Un

Dans une étape ECU4, l'unité centrale de commande U envoie au moins un message de commande P1MC à destination de l'au moins un dispositif domotique D1 correspondant à l'identifiant de localisation P1AD1 et à la fonction P1F1D1 selon le premier protocole de communication local P1.

Dans une étape ECD15, le dispositif domotique D1 exécute la fonction P1F1D1.

Dans une étape ECU6, l'unité centrale de commande U reçoit ECU6 un message de retour de commande RP1MC émis par le dispositif domotique D1 dans une étape ECD16 selon le premier protocole local de communication P1.

Dans une étape ECU7, l'unité centrale de commande U applique une règle de conversion de fonction RCFX afin de convertir une information de retour de commande P1RC exprimée selon le premier protocole de communication local P1 en une information de retour de commande P2RC exprimée selon le second protocole de communication cible P2.

Dans une étape ECU8, l'unité centrale de commande U émet au moins un message de retour de commande RP2MC à destination du nœud N1 comprenant une information de retour de commande P2RC selon le deuxième protocole cible de communication P2.

### Variantes

Selon une variante, l'unité centrale de commande U peut recevoir un message de commande P2MC correspondant à une commande groupée destinée à un ensemble de dispositifs domotiques identifiés par un ensemble d'identifiants de localisation. Dans ce cas, une pluralité de message de commande P1MC sont envoyés aux dispositifs de commande concernés, après conversion de la fonction concernée et de l'identification de localisation pour chaque dispositif. Par la suite, l'unité centrale de commande peut optionnellement agréger les résultats ou retour communiqués par les dispositifs domotiques D de façon à retourner un message de retour de commande P2RC unique. A titre d'exemple, il peut être convenu que la commande est réputée réalisée avec succès si toutes les réalisations de fonctions individuelles ont un retour positif, ou échouée si l'une des fonctions pour un dispositif domotique retourne une valeur d'échec.

Selon une autre variante déjà évoquée dans le cadre du procédé de configuration, un groupe de dispositif peut être identifié par un même identifiant de localisation selon le deuxième protocole. La table de correspondance comprend dans ce cas plusieurs identifiant de localisation selon le premier protocole de communication qui correspondent au même identifiant de localisation selon le second protocole de communication. Dans ce cas, il est possible de procéder comme ce qui a été évoqué précédemment pour la commande groupée. Une pluralité de fonctions selon le premier protocole de communication local est envoyée aux dispositifs concernés correspondant à la pluralité d'identifiants de localisation selon le premier protocole de communication, puis les retours sont stockés puis agrégés pour retourner un seul résultat pour le message de commande considéré.

### Procédé de supervision

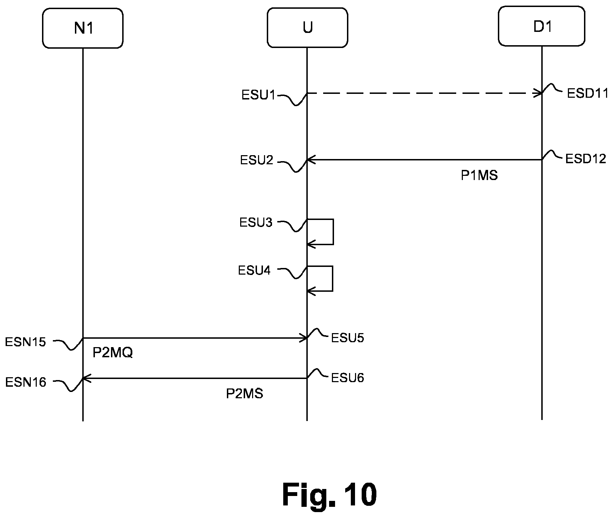

Nous allons à présent décrire un premier mode de réalisation d'un procédé de supervision d'une installation domotique 17 en référence à la figure 10. Nous supposerons ici que le procédé de configuration tel que décrit à la figure 4 a été précédemment exécuté, afin d'obtenir la configuration représentée sur la figure 3. Nous supposerons qu'un procédé de découverte tel que décrit à la figure 7 ou à la figure 8 a égalemenet été exécuté.

Le procédé de supervision est exécuté par l'unité centrale de commande U. Seul un nœud N1 communiquant selon le deuxième protocole de communication cible P2 sur le réseau R2 est représentés sur la figure 10. Toutefois, un seul nœud ou un nombre supérieur à deux de nœuds peut également être considéré. De la même façon, seul un dispositif domotique D1 communiquant selon le premier protocole local P1 est représenté mais d'autres dispositifs peuvent être présents.

Dans une étape ESU2, l'unité centrale de commande reçoit un message de supervision P1MS émis par un dispositif domotique D1 dans une étape ESD12, le message de supervision P1MS comprenant une information relative à une valeur d'au moins un variable d'état P1S1D1 de l'au moins un dispositif domotique D1 selon le premier protocole de communication P1. L'étape ESU2 peut être successive à une première étape ESU1 d'envoi d'un message d'interrogation ou de polling, reçu par le dispositif domotique D1 dans une étape ESD11. Alternativement, l'envoi du message P1MS peut être initié par le dispositif domotique D1 de façon autonome, par exemple en détectant un évènement modifiant la valeur d'une variable d'état P1S1D1.

L'envoi du message P1MS peut être réalisé de façon indifférenciée à un ensemble de nœud présent sur le réseau communiquant selon le premier protocole de communication. Cette disposition correspond à mode dit « Broadcast ». Selon un mode de mise en œuvre alternatif, le dispositif domotique peut envoyer le message de supervision seulement aux nœuds inscrits sur le réseau établi selon le premier protocole de communication, et en particulier à l'unité centrale de commande si celle-ci est inscrite. Dans ce cas, l'unité centrale réalise une étape préalable d'envoi à destination d'un dispositif domotique D1 d'une demande d'enregistrement dans une liste de souscription à un évènement relatif à l'au moins une variable d'état P1S1D1 du dispositif domotique D1.

Dans une étape ESU3, l'unité centrale de commande applique une règle de conversion d'état RCSX afin de convertir l'au moins une information relative à une valeur d'au moins un variable d'état P1S1D1 de l'au moins un dispositif domotique D1 exprimée selon le premier protocole de communication local P1 en une valeur d'au moins un variable d'état P2S1D1 du dispositif domotique D1 exprimée selon le second protocole de communication cible P2.

Dans une étape ESU4, l'unité centrale de commande adapte l'identifiant de localisation P1AD1 de l'au moins un dispositif domotique P1AD1 selon le premier protocole de communication P1 en un identifiant de localisation P2AD1 du dispositif domotique P2AD1 selon le deuxième protocole de communication P2. Les étapes les étapes ESU3 et ESU4 d'application d'une règle de conversion et d'adaptation d'adresse peuvent être réalisées séquentiellement dans un ordre indifférent ou simultanément.

Dans une étape ESU6, l'unité centrale de commande envoi un message de supervision P2MS à destination du nœud N1 communiquant selon un deuxième protocole de communication P2, le message de supervision P2MS comprenant une information relative à une valeur d'au moins un variable d'état P2S1D1 du dispositif domotique D1 selon le deuxième protocole cible de communication P2 et étant en relation avec l'identifiant de localisation P2AD1 du dispositif domotique D1 selon le deuxième protocole de communication P2.

Selon une possibilité, l'envoi du message de supervision P2MS peut être réalisée à l'initiative de l'unité centrale de commande U de façon spontanée ou suite à la réception d'un message de supervision P1MS en provenance d'un dispositif domotique D1.Selon une autre possibilité, le message de supervision P2MS peut être envoyé suite à la réception par l'unité centrale de commande U dans une étape ESU5 d'un message de requête MQ émis dans une étape ESN15 en provenance d'un nœud N1 du réseau R2. Selon cette deuxième possibilité, l'unité centrale de commande U comprend un espace ou base de stockage des valeurs de variables d'état pour les dispositifs domotiques qui lui sont rattachés.

Dans le cadre d'un envoi direct à l'initiative de l'unité centrale U, l'envoi du message de supervision P2MS peut être réalisé de façon indifférenciée à un ensemble de nœud présent sur le réseau communiquant selon le second protocole de communication P2. Cette disposition correspond à mode dit « Broadcast ». Selon un mode de mise en œuvre alternatif, l'unité centrale de commande peut envoyer le message de supervision seulement aux nœuds du réseau R2 enregistrés dans une liste de souscription, et en particulier au nœud N1. Dans ce cas, le nœud N1 réalise une étape préalable d'envoi à destination de l'unité centrale de commande U d'une demande d'enregistrement dans une liste de souscription à un évènement relatif à l'au moins une variable d'état P2S1D1 du dispositif domotique D1.

### Variante

Selon une variante, le procédé de supervision peut être adapté à un point de commande. Dans ce cas, la commande est identifiée et est notifiée à l'unité centrale de commande comme une modification d'une variable d'état.

Selon une variante, l'étape de polling ESU1 mentionnée précédemment permet de mettre en œuvre une émulation de mode événementiel pour un dispositif n'offrant pas une telle fonctionnalité, dans lequel l'unité centrale de commande U peut consulter périodiquement les valeurs de variables d'état des dispositif, détecter les modifications de valeurs de variables d'état en comparant la dernière valeur obtenue et la ou les données qu'elle a préalablement stockées et envoyer, en cas de modification, un message de supervision P2MS relatif à la variable d'état modifiée à destination d'un nœud N1 abonné aux modifications de cette variable d'état.

### Exemples

### Exemple 1

Un premier exemple concerne un dispositif domotique Dl de type capteur de température. Ce capteur communique selon un premier protocole local P1 de type IO-homecontrol et est destiné à être rendu accessible en tant que capteur selon le deuxième protocole de communication P2 de type Bluetooth Low Energy.

Lors du procédé de configuration ou d'appairage du capteur IO-homecontrol à l'unité centrale de commande U, dans le message de configuration MCfD1, Le dispositif domotique D est décrit comme un capteur IO système de type 0x03 (outside temperature sensor, unité: °K) avec un identifiant de localisation sous forme d'une adresse réseau IO 0x485670.

L'unité centrale de commande s'inscrit auprès du dispositif domotique D (capteur IO) pour recevoir des évènements relatifs à la variation de la température mesurée, ce qui correspond à une variable d'état P1S1S1 du dispositif.

L'unité centrale de commande procède ensuite à la détermination automatique d'un type ou profil Bluetooth standard à utiliser pour publier ce dispositif en utilisant une table de correspondance. En particulier le profil correspondant identifié est « Service Environmental Sensing » (org.bluetooth.service.environmental_sensing / 0x181A) avec une définition de variable d'état publiée « Température » (org.bluetooth.characteristic.temperature / 0x2A6E) selon une unité:°C (entier /résolution 0.01).

L'unité centrale de commande procède ensuite à la détermination d'un identifiant de localisation P2D1A d'une adresse Bluetooth libre pour le dispositif correspondant à l'étape ECfU6. En particulier, cette adresse réseau peut être constituée de 5 premiers octets statiques correspondant par exemple à un préfixe constructeur et à un numéro ou identifiant de l'unité centrale de commande U, et à un octet libre dont la valeur identifie le dispositif D1.Par exemple, l'unité centrale de commande peut choisir l'adresse 00:12:34:56:78:01.

L'unité centrale de commande U procède dans une étape ECfU7 / ECfU8 à l'enregistrement de la correspondance du type de dispositif selon le premier et le second protocole P2 et de la correspondant d'identifiants de localisation selon le premier et le second protocole dans la table des nœuds.

Le procédé de découverte est ensuite mis en œuvre.

Dans une première étape EDU1, l'unité centrale de commande U envoie un message d'annonce MACD1 et de description MDesc1 du dispositif domotique D1 sous forme d'un nouveau dispositif virtuel selon le second protocole de communication P2 sur le réseau Bluetooth R2.

Dans le cas d'un protocole Bluetooth, l'unité centrale de commande U peut implémenter un serveur bluetooth GATT (Generic Attribute Profile) qui annonce le dispositif D1 à intervalle régulier.

A réception d'un tel message, un nœud N1 constituant un client Bluetooth, par exemple un téléphone ou une tablette, peut alors établir une connexion point à point avec l'unité centrale de commande U pour piloter ou recevoir des données du dispositif virtuel.

Le procédé de supervision ou de commande peut ensuite être mis en œuvre.

Ainsi, lorsqu'un évènement IO radio émis par le capteur est reçu par l'unité centrale de commande en provenance d'un identifiant de localisation selon le premier protocole de communication P1 (ici une adresse IO 0x485670), celle ci détermine l'identifiant de localisation correspondant selon le second protocole de communication P2 en utilisant la table des nœuds.Dans l'exemple considéré, l'adresse retournée est ici Bluetooth 00:12:34:56:78:01.

Dans une étape ESU3, l'unité centrale de commande U détermine si la variable d'état de température P1S1D1 possède une correspondance dans le profil Bluetooth du dispositif virtuel et la fonction de conversion éventuelle. Dans l'exemple considéré, la variable d'état température en degrés Kelvin du dispositif domotique D1 peut être mappée sur une notification rattachée à la variable d'état P2S1D1 ou caractéristique « Température » du service « Environmental Sensing » émulé selon le second protocole de communication P2.

L'unité centrale de commande U applique la fonction de conversion suivante qui correspond à une conversion en degrés Celsius et en une valeur entière avec une précision de 0.01 :
T-> floor((T-273.15)^{∗}100).

L'unité centrale de commande U envoie ensuite un message de supervision P2MS sous forme d'une notification Bluetooth au nœud N1 connecté avec la nouvelle valeur de température P2S1D1.

Selon une variante utilisant le procédé de commande, une lecture active de la température peut être réalisée.

Dans ce cas, le nœud N1 qui est un client Bluetooth apairé avec le dispositif virtuel envoie une requête de lecture (Read Request) concernant la variable d'état ou caractéristique « Temperature » du service « Environmental Sensing » du dispositif virtuel, dans une étape ESN15.

L'unité centrale de commande peut répondre en utilisant la dernière valeur reçue du capteur IO ou envoyer une commande au dispositif pour obtenir cette valeur qui est stockée par l'unité centrale de commande U.

### Exemple 2

Un second exemple concerne un dispositif domotique D1 de type lampe à variateur selon un premier protocole de communication local P1 de type ZWave destinée à être publié comme une ressource de type « dimmer.lamp » dans un second protocole cible P2 de type OIC/lotivity sur un réseau R2 de type IP.

Lors du procédé de configuration ou d'appairage de la lampe ZWave à l'unité centrale de commande U, dans le message de configuration MCfD1, Le dispositif domotique D est décrit comme un dispositif de type « Light Dimmer » avec un identifiant de localisation P1D1A correspondant à l'adresse ZWave 26 qui possède une définition d'un groupe de fonction (« cluster fonctionnel ») « SWITCH_MULTILEVEL_V3 » correspondant à un réglage d'un niveau d'intensité.

L'unité centrale de commande U s'inscrit auprès du dispositif domotique pour recevoir une notification sur changement d'état ou d'une variable d'état décrivant l'état de fonctionnement (« report »).

L'unité centrale de commande U détermine un type de dispositif ou profil selon le deuxième protocole cible P2 lotivity à utiliser pour publier ce dispositif en utilisant une table de correspondance. En particulier le profil ou type de ressource correspondant identifié est « oic.r.light.dimming » présentant une valeur de commande d'éclairage proportionnelle comprise entre 0 et 100%.

L'unité centrale de commande détermine ensuite un identifiant de localisation P2D1A selon le deuxième protocole de communication. Le deuxième protocole de communication cible P2 ne nécessite pas forcement une adresse réseau différente par dispositif. Ainsi, il est possible d'utiliser une adresse réseau unique, par exemple l'adresse IP du contrôleur domotique (ex: 192.168.0.2).

Pour construire l'identifiant de localisation du dispositif virtuel, c'est à dire dans ce cas une URL selon le deuxième protocole cible lotivity, l'unité centrale de commande U procède à la sélection d'un numéro de ressource qui n'a pas encore été attribué par cette unité centrale de commande U en partant de 1 puis combine cette élément avec l'adresse IP pour obtenir par exemple l'URL suivante : oc://192.168.0.2:1234/light/1.

L'unité centrale de commande U procède dans une étape ECfU7/ECfU8 à l'enregistrement de la correspondance du type de dispositif selon le premier et le second protocole P2 et de la correspondance d'adresses selon le premier et le second protocole dans une table des nœuds.

L'unité centrale de commande U procède également à un enregistrement ou à une déclaration de la ressource dans le logiciel serveur lotivity qu'elle exécute, le logiciel étant actif en écoute sur l'adresse 192.168.0.2 au port 1234.

Le procédé de découverte peut ensuite être mis en œuvre.

Le dispositif D1 virtuel déclaré peut être découvert par un client lotivity standard exécuté par un nœud N1 en utilisant une requête multicast de découverte qui correspond à un message de découverte MD.

Le procédé de supervision ou de commande peut ensuite être mis en œuvre.

Dans le cadre d'un procédé de commande, un client lotivity ou nœud N1 ayant découvert le dispositif domotique D1 virtuel peut alors commander le dispositif D1 en envoyant un message de commande P2MC sous forme d'une requête « CoAP PUT » concernant la propriété « dimmingSetting » de la ressource identifiée par l'identifiant de localisation P2D1A selon le deuxième protocole de communication P2 « oc://192.168.0.2:1234/light/1 ».

Dans ce cas le serveur lotivity de l'unité centrale de commande U reçoit le message de commande P2MC puis détermine l'identifiant de localisation P1D1A selon le premier protocole de communication P1 correspondant, dans l'exemple considéré « ZWave 26 » en utilisant la table des nœuds.

L'unité centrale de commande détermine également la fonction de conversion de la commande ou fonction (lotivity -> ZWave) puis construit et envoie un message de commande P1MC au format ZWave au dispositif domotique D1.

L'unité centrale peut ensuite, en fonction de la réponse P1RC du dispositif domotique D1 à la commande, répondre au message de commande P2MC par un message de retour de commande P2RC correspondant à un succès ou à un échec de la commande ou de l'appel de fonction.

Selon un exemple du procédé de supervision, le nœud N1 peut consulter la valeur d'une variable d'état actuelle du dispositif domotique D1 en envoyant un message de commande P2MC sous forme d'une requête « CoAP GET » concernant la ressource identifiée par l'identifiant de localisation P2D1A selon le deuxième protocole de communication P2 « oc://192.168.0.2:1234/light/1 ».

Dans ce cas le serveur lotivity de l'unité centrale de commande U reçoit le message de commande P2MC puis détermine l'identifiant de localisation P1D1A selon le premier protocole de communication P1 correspondant, dans l'exemple considéré « ZWave 26 » en utilisant la table des nœuds.

Par la suite, l'unité centrale de commande U détermine la ou les variables d'états P1S1D1, P1S2D1 selon le premier protocole de communication local P1 ZWave à renvoyer, par exemple la dernière valeur reçue du « cluster SWITCH_MULTILEVEL V3 » et les fonctions de conversion éventuelles, et en particulier le nom de la variable d'état dans le deuxième protocole de communication cible lotivity, à savoir dans l'exemple présent la propriété « dimmerSetting ».

L'unité centrale de commande U peut ensuite convertir la valeur avec la fonction de conversion et répondre à la requête CoAP avec la valeur obtenue.

## Revendications

1. Procédé de configuration d'une installation domotique (17) comprenant au moins un dispositif domotique (D1, D2) et au moins une unité centrale de commande (U), l'au moins un dispositif domotique (D1, D2) étant susceptible de communiquer avec l'unité centrale de commande (U) par l'intermédiaire d'au moins un premier protocole local (P1) ; le procédé étant exécuté par l'au moins une unité centrale de commande (U) et comprenant les étapes suivantes :
- Réception (EcfU3, EcfU4, ECfU2') d'au moins un message de configuration (MCfD1, MCfD2, MCfUsr) relatif à un identifiant de localisation (P1AD1, P1AD2) d'au moins un dispositif domotique (D1, D2) selon le premier protocole de communication local (P1) et à au moins une définition d'une fonction (P1F1D1, P1F2D1, P1F1D2, P1F2D2) ou d'un groupe de fonctions de l'au moins un dispositif domotique (D1, D2) selon ledit premier protocole de communication (P1) ;
- Obtention (EcfU5) d'un identifiant de localisation (P2AD1, P2AD2), correspondant à une adresse réseau, de l'au moins un dispositif domotique (D1, D2) selon un second protocole de communication cible (P2) tel que l'identifiant de localisation (P2AD1, P2AD2) est distinct pour chaque dispositif domotique (D1, D2) ;
- Enregistrement (ECfU7) de la correspondance entre l'identifiant de localisation (P1AD1, P1AD2) de l'au moins un dispositif domotique (D1, D2) selon le premier protocole de communication et l'identifiant de localisation (P2AD1, P2AD2) de l'au moins un dispositif domotique (D1, D2) selon le second protocole de communication (P2) ;
- Enregistrement (EcfU7) de l'au moins une définition d'une fonction (P1F1D1, P1F2D1, P1F1D2, P1F2D2) ou d'un groupe de fonctions de l'au moins un dispositif domotique (D1, D2) ; et/ou d'une règle de conversion de fonction (RCFX) agencée pour convertir la définition de l'au moins une fonction (P1F1D1, P1F2D1, P1F1D2, P1F2D2) ou groupe de fonction selon le premier protocole de communication (P1) en au moins une définition d'une fonction (P2F1D1, P2F2D1, P2F1D2, P2F2D2) ou d'un groupe de fonction selon le second protocole de communication cible (P2).

2. Procédé selon la revendication 1, comprenant en outre l'étape suivante :
- Obtention (EcfU6) d'au moins une règle de conversion de fonction (RCFX) agencée pour convertir la définition de l'au moins une fonction (P1F1D1, P1F2D1, P1F1D2, P1F2D2) selon le premier protocole de communication (P1) en au moins une définition d'une fonction (P2F1D1, P2F2D1, P2F1D2, P2F2D2) selon le second protocole de communication cible (P2) et/ou d'une règle de conversion d'état (RCSX) agencée pour convertir une définition d'au moins une variable d'état (P1S1D1, P1S2D1, P1S1D2, P1S2D2) selon le premier protocole de communication (P1) en au moins une définition d'une variable d'état (P2S1D1, P2S2D1, P2S1D2, P2S2D2) selon le second protocole de communication cible (P2).
- Enregistrement (EcfU7) de l'au moins une règle de conversion de fonction (RCFX) et/ou de l'au moins une règle de conversion d'état (RCSX).

3. Procédé selon l'une des revendications 1 ou 2, comprenant en outre l'étape suivante :
- définition d'une action à réaliser au moins partiellement par l'unité centrale de commande en correspondance avec une fonction selon le deuxième protocole correspondant à un identifiant de localisation.

4. Procédé selon l'une quelconque des revendications 1 à 3, dans lequel l'étape de conversion comprend la limitation de la fonction demandée ou l'interdiction d'une commande/fonction à réaliser.

5. Procédé selon l'une quelconque des revendications 1 à 4, dans lequel le message de configuration (MCfD1, MCfD2, MCfUsr) est relatif à au moins une définition d'une variable d'état (P1S1D1, P1S2D1, P1S1D2, P1S2D2) ou d'un groupe de variables d'états de l'au moins un dispositif domotique (D1, D2) selon ledit premier protocole de communication (P1), ledit procédé comprenant en outre une étape d'enregistrement (EcfU8) d'au moins une définition d'une variable d'état (P1S1D1, P1S2D1, P1S1D2, P1S2D2) ou d'un groupe de variables d'états de l'au moins un dispositif domotique (D1, D2), et d'une règle de conversion d'état (RCSX) agencée pour convertir la définition de l'au moins une variable d'état (P1S1D1, P1S2D1, P1S1D2, P1S2D2) selon le premier protocole de communication (P1) en au moins une définition d'une variable d'état (P2S1D1, P2S2D1, P2S1D2, P2S2D2) selon le second protocole de communication cible (P2).

6. Procédé selon l'une quelconque des revendications 1 à 5, dans lequel le message de configuration (MCfD1, MCfD2, MCfUsr) est également relatif à un type (P2TD1, P2TD2) de l'au moins un dispositif domotique (D1, D2).

7. Procédé selon la revendication 6, dans lequel l'étape d'enregistrement (EcfU7) comprend l'enregistrement de l'au moins un type (P2TD1, P2TD2) de l'au moins un dispositif domotique (D1, D2).

8. Procédé de commande d'une installation domotique (17) comprenant au moins un dispositif domotique (D1, D2) et au moins une unité centrale de commande (U), l'au moins un dispositif domotique (D1, D2) étant susceptible de communiquer avec l'unité centrale de commande (U) par l'intermédiaire d'au moins un premier protocole local (P1) ; le procédé étant exécuté par l'au moins une unité centrale de commande (U) et comprenant les étapes suivantes :
- Connexion (ECUO) entre un nœud (N1) communiquant selon un deuxième protocole de communication (P2) et l'unité centrale de commande (U), ladite unité centrale de commande (U) agissant en tant que représentant virtuel de l'au moins un dispositif domotique (D1, D2) selon le premier protocole (P1) ;
- Réception (ECU1) d'au moins un message de commande (P2MC) en provenance du nœud (N1) comprenant au moins un identifiant de localisation (P2AD1, P2AD2), correspondant à une adresse réseau, d'un dispositif domotique (D1, D2) selon le deuxième protocole de communication cible (P2) tel que l'identifiant de localisation (P2AD1, P2AD2) est distinct pour chaque dispositif domotique (D1, D2), et au moins une définition d'une fonction (P2F1D1, P2F2D1, P2F1D2, P2F2D2) du dispositif domotique (D1, D2) selon le deuxième protocole de communication (P2) ;
- Détermination (ECU2) d'un identifiant de localisation (P1AD1, P1AD2) de l'au moins un dispositif domotique (D1, D2) selon le premier protocole de communication correspondant à l'identifiant de localisation (P2AD1, P2AD2) de l'au moins un dispositif domotique (D1, D2) selon le second protocole de communication (P2)
- Application (ECU3) d'une règle de conversion de fonction (RCFX) agencée pour convertir la définition de l'au moins une fonction (P2F1D1, P2F2D1, P2F1D2, P2F2D2) selon le second protocole de communication cible (P2) en au moins une définition d'une fonction (P1F1D1, P1F2D1, P1F1D2, P1F2D2) selon le premier protocole de communication local (P1) ;
- Envoi (ECU4) d'au moins un message de commande (P1MC) à destination de l'au moins un dispositif domotique (D1, D2) correspondant à l'identifiant de localisation (P1AD1, P1AD2) et à la fonction (P1F1D1, P1F2D1, P1F1D2, P1F2D2) selon le premier protocole de communication local (P1).

9. Procédé de commande selon la revendication 8, comprenant en outre les étapes suivantes :
- Réception (ECU6) d'au moins un message de retour de commande (RP1MC) en provenance de l'au moins un dispositif domotique (D1, D2) selon le premier protocole local de communication (P1) ;
- Application (ECU7) d'une règle de conversion de fonction (RCFX) afin de convertir une information de retour de commande (P1RC) exprimée selon le premier protocole de communication local (P1) en une information de retour de commande (P2RC) exprimée selon le second protocole de communication cible (P2) ;
- Envoi (ECU8) d'au moins un message de retour de commande (RP2MC) à destination de l'au moins un nœud (N1) communiquant selon un deuxième protocole de communication (P2), le message de retour de commande (R2PMC) comprenant une information de retour de commande (P2RC) selon le deuxième protocole cible de communication (P2).

10. Procédé de supervision d'une installation domotique (17) configurée par l'exécution du procédé de configuration selon l'une quelconque des revendications 1 à 7, ledit procédé de supervision d'une installation domotique (17) comprenant au moins un dispositif domotique (D1, D2) et au moins une unité centrale de commande (U), l'au moins un dispositif domotique (D1, D2) étant susceptible de communiquer avec l'unité centrale de commande (U) par l'intermédiaire d'au moins un premier protocole local (P1) ; le procédé étant exécuté par l'au moins une unité centrale de commande (U) et comprenant les étapes suivantes :
- Réception (ESU2) d'un message de supervision (P1MS) en provenance d'un dispositif domotique (D1, D2) comprenant une information relative à une valeur d'au moins un variable d'état (P1S1D1, P1S2D1, P1S1D2, P1S2D2) de l'au moins un dispositif domotique (D1, D2) selon ledit premier protocole de communication (P1) ;
- Application (ESU3) d'une règle de conversion d'état (RCSX) afin de convertir l'au moins une information relative à une valeur d'au moins un variable d'état (P1S1D1, P1S2D1, P1S1D2, P1S2D2) de l'au moins un dispositif domotique (D1, D2) exprimée selon le premier protocole de communication local (P1) en une valeur d'au moins un variable d'état (P2S1D1, P2S2D1, P2S1D2, P2S2D2) de l'au moins un dispositif domotique (D1, D2) exprimée selon le second protocole de communication cible (P2) ;
- Adaptation (ESU4) de l'identifiant de localisation (P1AD1, P1AD2) de l'au moins un dispositif domotique (P1AD1, P1AD2) selon le premier protocole de communication (P1) en un identifiant de localisation (P2AD1, P2AD2), correspondant à une adresse réseau, de l'au moins un dispositif domotique (P2AD1, P2AD2) selon le deuxième protocole de communication cible (P2) tel que l'identifiant de localisation (P2AD1, P2AD2) est distinct pour chaque dispositif domotique (D1, D2) ;
- Envoi (ECU5) d'au moins un message de supervision (P2MS) à destination d'au moins un nœud (N1) communiquant selon un deuxième protocole de communication (P2), le message de supervision (P2MS) comprenant une information relative à une valeur d'au moins un variable d'état (P2S1D1, P2S2D1, P2S1D2, P2S2D2) de l'au moins un dispositif domotique (D1, D2) selon le deuxième protocole cible de communication (P2) et en relation avec l'identifiant de localisation (P2AD1, P2AD2) de l'au moins un dispositif domotique (D1, D2) selon le deuxième protocole de communication (P2).

11. Procédé selon la revendication 10, dans lequel l'étape d'envoi (ECU8) est réalisée à destination d'au moins un nœud (N1) enregistré dans une liste de souscription à un évènement relatif à l'au moins une variable d'état (P2S1D1, P2S2D1, P2S1D2, P2S2D2).

12. Procédé selon l'une des revendications 10 ou 11, comprenant une étape d'envoi à destination d'un dispositif domotique (D1, D2) d'une demande d'enregistrement dans une liste de souscription à un évènement relatif à l'au moins une variable d'état (P2S1D1, P2S2D1, P2S1D2, P2S2D2) du dispositif domotique (D1, D2).

## Patentansprüche

1. Verfahren zur Konfiguration einer Heimautomatisierungsanlage (17), umfassend mindestens eine Heimautomatisierungsvorrichtung (D1, D2) und mindestens eine zentrale Steuerungseinheit (U), wobei die mindestens eine Heimautomatisierungsvorrichtung (D1, D2) mittels mindestens eines ersten lokalen Protokolls (P1) mit der zentralen Steuerungseinheit (U) kommunizieren kann, wobei das Verfahren durch die mindestens eine zentrale Steuerungseinheit (U) ausgeführt wird und die folgenden Schritte umfasst:
- Empfangen (EcfU3, EcfU4, ECfU2') mindestens einer Konfigurationsmitteilung (MCfD1, MCfD2, MCfUsr) in Bezug auf eine Lokalisierungskennung (P1AD1, P1AD2) der mindestens einen Heimautomatisierungsvorrichtung (D1, D2) gemäß dem ersten lokalen Kommunikationsprotokoll (P1) und auf mindestens eine Funktionsdefinition (P1F1D1, P1 F2D1, P1F1D2, P1F2D2) oder einer Gruppe von Funktionen der mindestens einen Heimautomatisierungsvorrichtung (D1, D2) gemäß dem ersten Kommunikationsprotokoll (P1);
- Erlangen (EcfU5) einer Lokalisierungskennung (P2AD1, P2AD2), entsprechend einer Netzadresse, der mindestens einen Heimautomatisierungsvorrichtung (D1, D2) gemäß einem zweiten Zielkommunikationsprotokoll (P2), so dass die Lokalisierungskennung (P2AD1, P2AD2) für jede Heimautomatisierungsvorrichtung (D1, D2) unterschiedlich ist;
- Registrieren (ECfU7) der Übereinstimmung zwischen der Lokalisierungskennung (P1AD1, P1AD2) der mindestens einen Heimautomatisierungsvorrichtung (D1, D2) gemäß dem ersten Kommunikationsprotokoll und der Lokalisierungskennung (P2AD1, P2AD2) der mindestens einen Heimautomatisierungsvorrichtung (D1, D2) gemäß dem zweiten Kommunikationsprotokoll (P2);
- Registrieren (EcfU7) der mindestens einen Funktionsdefinition (P1F1D1, P1F2D1, P1F1D2, P1F2D2) oder einer Gruppe von Funktionen der mindestens einen Heimautomatisierungsvorrichtung (D1, D2); und/oder einer Funktionskonvertierungsregel (RCFX), die angeordnet ist, um die Definition der mindestens einen Funktion (P1F1D1, P1F2D1, P1F1D2, P1F2D2) oder Gruppe von Funktionen gemäß dem ersten Kommunikationsprotokoll (P1) in mindestens eine Funktionsdefinition (P2F1D1, P2F2D1, P2F1D2, P2F2D2) oder eine Gruppe von Funktionen gemäß dem zweiten Zielkommunikationsprotokoll (P2) zu konvertieren.

2. Verfahren nach Anspruch 1, ferner umfassend den folgenden Schritt:
- Erlangen (EcfU6) mindestens einer Funktionskonvertierungsregel (RCFX), die angeordnet ist, um die Definition der mindestens einen Funktion (P1F1D1, P1F2D1, P1F1D2, P1F2D2) gemäß dem ersten Kommunikationsprotokoll (P1) in mindestens eine Funktionsdefinition (P2F1D1, P2F2D1, P2F1D2, P2F2D2) gemäß dem zweiten Zielkommunikationsprotokoll (P2) zu konvertieren und/oder einer Zustandskonvertierungsregel (RCSX), die angeordnet ist, um eine Definition mindestens einer Zustandsvariablen (P1S1D1, P1S2D1, P1S1D2, P1S2D2) gemäß dem ersten Kommunikationsprotokoll (P1) in mindestens eine Definition einer Zustandsvariablen (P2S1D1, P2S2D1, P2S1D2, P2S2D2) gemäß dem zweiten Zielkommunikationsprotokoll (P2) zu konvertieren.
- Registrieren (EcfU7) der mindestens einen Funktionskonvertierungsregel (RCFX) und/oder der mindestens einen Zustandskonvertierungsregel (RCSX).

3. Verfahren nach einem der Ansprüche 1 oder 2, ferner umfassend den folgenden Schritt:
- Definieren einer Maßnahme, die durch die zentrale Steuerungseinheit in Übereinstimmung mit einer Funktion gemäß dem zweiten Protokoll entsprechend einer Lokalisierungskennung mindestens teilweise auszuführen ist.

4. Verfahren nach einem der Ansprüche 1 bis 3, wobei der Schritt des Konvertierens die Begrenzung der angeforderten Funktion oder die Untersagung einer auszuführenden Steuerung/Funktion umfasst.

5. Verfahren nach einem der Ansprüche 1 bis 4, wobei sich die Konfigurationsmitteilung (MCfD1, MCfD2, MCfUsr) auf mindestens eine Zustandsvariable (P1S1D1, P1S2D1, P1S1D2, P1S2D2) oder eine Gruppe von Zustandsvariablen der mindestens einen Heimautomatisierungsvorrichtung (D1, D2) gemäß dem ersten Kommunikationsprotokoll (P1) bezieht, wobei das Verfahren ferner einen Schritt des Registrierens (EcfU8) mindestens einer Zustandsvariablen (P1S1D1, P1S2D1, P1S1D2, P1S2D2) oder einer Gruppe von Zustandsvariablen der mindestens einen Heimautomatisierungsvorrichtung (D1, D2) und einer Zustandskonvertierungsregel (RCSX), die angeordnet ist, um die Definition der mindestens einen Zustandsvariablen (P1S1D1, P1S2D1, P1S1D2, P1S2D2) gemäß dem ersten Kommunikationsprotokoll (P1) in mindestens eine Definition einer Zustandsvariablen (P2S1D1, P2S2D1, P2S1D2, P2S2D2) gemäß dem zweiten Zielkommunikationsprotokoll (P2) zu konvertieren, umfasst.

6. Verfahren nach einem der Ansprüche 1 bis 5, wobei sich die Konfigurationsmitteilung (MCfD1, MCfD2, MCfUsr) auch auf einen Typ (P2TD1, P2TD2) der mindestens einen Heimautomatisierungsvorrichtung (D1, D2) bezieht.

7. Verfahren nach Anspruch 6, wobei der Schritt des Registrierens (EcfU7) das Registrieren des mindestens einen Typs (P2TD1, P2TD2) der mindestens einen Heimautomatisierungsvorrichtung (D1, D2) umfasst.

8. Steuerungsverfahren einer Heimautomatisierungsanlage (17), umfassend mindestens eine Heimautomatisierungsvorrichtung (D1, D2) und mindestens eine zentrale Steuerungseinheit (U), wobei die mindestens eine Heimautomatisierungsvorrichtung (D1, D2) mittels mindestens eines ersten lokalen Protokolls (P1) mit der zentralen Steuerungseinheit (U) kommunizieren kann, wobei das Verfahren durch die mindestens eine zentrale Steuerungseinheit (U) ausgeführt wird und die folgenden Schritte umfasst:
- Verbinden (ECUO) zwischen einem Knoten (N1), der gemäß einem zweiten Kommunikationsprotokoll (P2) kommuniziert, und der zentralen Steuerungseinheit (U), wobei die zentrale Steuerungseinheit (U) als virtueller Vertreter der mindestens einen Heimautomatisierungsvorrichtung (D1, D2) gemäß dem ersten Protokoll (P1) auftritt;
- Empfangen (ECU1) der mindestens einen vom Knoten (N1) kommenden Steuerungsmitteilung (P2MC), umfassend mindestens eine Lokalisierungskennung (P2AD1, P2AD2), entsprechend einer Netzadresse, einer Heimautomatisierungsvorrichtung (D1, D2) gemäß dem zweiten Zielkommunikationsprotokoll (P2), so dass die Lokalisierungskennung (P2AD1, P2AD2) für jede Heimautomatisierungsvorrichtung (D1, D2) unterschiedlich ist, und mindestens einer Funktionsdefinition (P2F1D1, P2F2D1, P2F1D2, P2F2D2) der Heimautomatisierungsvorrichtung (D1, D2) gemäß dem zweiten Kommunikationsprotokoll (P2);
- Bestimmen (ECU2) einer Lokalisierungskennung (P1AD1, P1AD2) der mindestens einen Heimautomatisierungsvorrichtung (D1, D2) gemäß dem ersten Kommunikationsprotokoll entsprechend der Lokalisierungskennung (P2AD1, P2AD2) der mindestens einen Heimautomatisierungsvorrichtung (D1, D2) gemäß dem zweiten Kommunikationsprotokoll (P2)
- Anwenden (ECU3) einer Funktionskonvertierungsregel (RCFX), die angeordnet ist, um die Definition der mindestens einen Funktion (P2F1D1, P2F2D1, P2F1D2, P2F2D2) gemäß dem zweiten Zielkommunikationsprotokoll (P2) in mindestens eine Funktionsdefinition (P1F1D1, P1F2D1, P1F2D2, P1F2D2) gemäß dem ersten lokalen Kommunikationsprotokoll (P1) zu konvertieren;
- Senden (ECU4) mindestens einer Steuerungsmitteilung (P1MC) an das Ziel der mindestens einen Heimautomatisierungsvorrichtung (D1, D2) entsprechend der Lokalisierungskennung (P1AD1, P1AD2) und an der Funktion (P1F1D1, P1F2D1, P1F1D2, P1F2D2) gemäß dem ersten lokalen Kommunikationsprotokoll (P1).

9. Steuerungsverfahren nach Anspruch 8, ferner umfassend die folgenden Schritte:
- Empfangen (ECU6) mindestens einer von der mindestens einen Heimautomatisierungsvorrichtung (D1, D2) kommenden Steuerungsumkehrmitteilung (RP1MC) gemäß dem ersten lokalen Kommunikationsprotokoll (P1);
- Anwenden (ECU7) einer Funktionskonvertierungsregel (RCFX), um eine gemäß dem ersten lokalen Kommunikationsprotokoll (P1) ausgedrückte Steuerungsumkehrinformation (P1RC) in eine gemäß dem zweiten Zielkommunikationsprotokoll (P2) ausgedrückte Steuerungsumkehrinformation (P2RC) zu konvertieren;
- Senden (ECU8) mindestens einer Steuerungsumkehrmitteilung (RP2MC) an das Ziel des mindestens einen Knotens (N1), der gemäß einem zweiten Kommunikationsprotokoll (P2) kommuniziert, wobei die Steuerungsumkehrmitteilung (P2PMC) eine Steuerungsumkehrinformation (P2RC) gemäß dem zweiten Zielkommunikationsprotokoll (P2) umfasst.

10. Überwachungsverfahren einer Heimautomatisierungsanlage (17), die durch die Ausführung des Konfigurationsverfahrens nach einem der Ansprüche 1 bis 7 konfiguriert ist, wobei das Überwachungsverfahren einer Heimautomatisierungsanlage (17) mindestens eine Heimautomatisierungsvorrichtung (D1, D2) und mindestens eine zentrale Steuerungseinheit (U) umfasst, wobei die mindestens eine Heimautomatisierungsvorrichtung (D1, D2) mittels mindestens eines ersten lokalen Protokolls (P1) mit der zentralen Steuerungseinheit (U) kommunizieren kann, wobei das Verfahren durch die mindestens eine zentrale Steuerungseinheit (U) ausgeführt wird und die folgenden Schritte umfasst:
- Empfangen (ESU2) einer von einer Heimautomatisierungsvorrichtung (D1, D2) kommenden Überwachungsmitteilung (P1MS), umfassend eine auf einen Wert mindestens einer Zustandsvariablen (P1S1D1, P1S2D1, P1S1D2, P1S2D2) der mindestens einen Heimautomatisierungsvorrichtung (D1, D2) bezogene Information, gemäß dem ersten Kommunikationsprotokoll (P1);
- Anwenden (ESU3) einer Zustandskonvertierungsregel (RCSX), um die mindestens eine auf einen Wert mindestens einer Zustandsvariablen (P1S1D1, P1S2D1, P1S1D2, P1S2D2) der mindestens einen Heimautomatisierungsvorrichtung (D1, D2) bezogene Information, der gemäß dem ersten lokalen Kommunikationsprotokoll (P1) ausgedrückt ist, in einen Wert mindestens einer Zustandsvariablen (P2S1D1, P2S2D1, P2S1D2, P2S2D2) der mindestens einen Heimautomatisierungsvorrichtung (D1, D2), der gemäß dem zweiten Zielkommunikationsprotokoll (P2) ausgedrückt ist, zu konvertieren;
- Anpassen (ESU4) der Lokalisierungskennung (P1AD1, P1AD2) der mindestens einen Heimautomatisierungsvorrichtung (P1AD1, P1AD2) gemäß dem ersten Kommunikationsprotokoll (P1) in eine Lokalisierungskennung (P2AD1, P2AD2), entsprechend einer Netzadresse, der mindestens einen Heimautomatisierungsvorrichtung (P2AD1, P2AD2) gemäß dem zweiten Zielkommunikationsprotokoll (P2), so dass die Lokalisierungskennung (P2AD1, P2AD2) für jede Heimautomatisierungsvorrichtung (D1, D2) unterschiedlich ist;
- Senden (ECU5) mindestens einer Überwachungsmitteilung (P2MS) an das Ziel des mindestens einen Knotens (N1), der gemäß einem zweiten Kommunikationsprotokoll (P2) kommuniziert, wobei die Überwachungsmitteilung (P2MS) eine Information umfasst, die sich auf einen Wert mindestens einer Zustandsvariablen (P2S1D1, P2S2D1, P2S1D2, P2S2D2) der mindestens einen Heimautomatisierungsvorrichtung (D1, D2) bezieht, gemäß dem zweiten Zielkommunikationsprotokoll (P2) und in Bezug auf die Lokalisierungskennung (P2AD1, P2AD2) der mindestens einen Heimautomatisierungsvorrichtung (D1, D2) gemäß dem zweiten Kommunikationsprotokoll (P2).

11. Verfahren nach Anspruch 10, wobei der Schritt des Sendens (ECU8) an das Ziel des mindestens einen Knotens (N1), der in einer Teilnahmeliste eines auf die mindestens eine Zustandsvariable (P2S1D1, P2S2D1, P2S1D2, P2S2D2) bezogenen Ereignisses eingetragen ist, ausgeführt wird.

12. Verfahren nach einem der Ansprüche 10 oder 11, umfassend einen Schritt des Sendes an ein Ziel einer Heimautomatisierungsvorrichtung (D1, D2) einer Anforderung einer Registrierung in einer Teilnahmeliste eines auf die mindestens eine Zustandsvariable (P2S1D1, P2S2D1, P2S1D2, P2S2D2) bezogenen Ereignisses der Heimautomatisierungsvorrichtung (D1, D2).

## Claims

1. A method of configuring a home automation installation (17) comprising at least one home automation device (D1, D2) and at least one central control unit (U), the at least one home automation device (D1, D2) being capable of communicating with the central control unit (U) via at least one first local protocol (P1); the method being executed by the at least one central control unit (U) and comprising the following steps:
- reception (EcfU3, EcfU4, ECfU2') of at least one configuration message (MCfD1, MCfD2, MCfUsr) relating to a location identifier (P1AD1, P1AD2) of at least one home automation device (D1, D2) according to the first local communication protocol (P1) and to at least one definition of a function (P1F1D1, P1F2D1, P1F1D2, P1F2D2) or of a group of functions of the at least one home automation device (D1, D2) according to said first communications protocol (P1);
- obtainment (EcfU5) of a location identifier (P2AD1, P2AD2), corresponding to a network address, of the at least one home automation device (D1, D2) according to a second target communication protocol (P2) such as the location identifier (P2AD1, P2AD2) is distinct for each home automation device (D1, D2);
- recording (ECfU7) of the correspondence between the location identifier (P1AD1, P1AD2) of the at least one home automation device (D1, D2) according to the first communication protocol and the location identifier (P2AD1, P2AD2) of the at least one home automation device (D1, D2) according to the second communication protocol (P2);
- recording (EcfU7) of the at least one definition of a function (P1F1D1, P1F2D1, P1F1D2, P1F2D2) or of a group of functions of the at least one home automation device (D1, D2); and/or of a function conversion rule (RCFX) arranged to convert the definition of the at least one function (P1F1D1, P1F2D1, P1F1D2, P1F2D2) or of the function group according to the first communication protocol (P1) into at least one definition of a function (P2F1D1, P2F2D1, P2F1D2, P2F2D2) or of a function group according to the second target communication protocol (P2).

2. The method according to claim 1, further comprising the following step:
- obtainment (EcfU6) of at least one function conversion rule (RCFX) arranged to convert the definition of the at least one function (P1F1D1, P1F2D1, P1F1D2, P1F2D2) according to the first communication protocol (P1) into at least one definition of a function (P2F1D1, P2F2D1, P2F1D2, P2F2D2) according to the second target communication protocol (P2) and/or of a state conversion rule (RCSX) arranged to convert a definition of at least one state variable (P1S1D1, P1S2D1, P1S1D2, P1S2D2) according to the first communication protocol (P1) into at least one definition of a state variable (P2S1D1, P2S2D1, P2S1D2, P2S2D2) according to the second target communication protocol (P2).
- recording (EcfU7) of at least one function conversion rule (RCFX) and/or of at least one state conversion rule (RCSX).

3. The method according to any of claims 1 or 2, further comprising the following step:
- definition of an action to be performed at least partially by the central control unit in correspondence with a function according to the second protocol corresponding to a location identifier.

4. The method according to any one of claims 1 to 3, wherein the conversion step comprises the limitation of the requested function or the prohibition of a control/function to be performed.

5. The method according to any one of claims 1 to 4, wherein the configuration message (MCfD1, MCfD2, MCfUsr) relates to at least one definition of a state variable (P1S1D1, P1S2D1, P1S1D2, P1S2D2) or of a group of state variables of at least one home automation device (D1, D2) according to said first communication protocol (P1), said method further comprising a step of recording (EcfU8) at least one definition of a state variable (P1S1D1, P1S2D1, P1S1D2, P1S2D2) or of a group of state variables of at least one home automation device (D1, D2), and a state conversion rule (RCSX) arranged to convert the definition of the at least one state variable (P1S1D1, P1S2D1, P1S1D2, P1S2D2) according to the first communication protocol (P1) into at least one definition of a state variable (P2S1D1, P2S2D1, P2S1D2, P2S2D2) according to the second target communication protocol (P2).

6. The method according to any one of claims 1 to 5, wherein the configuration message (MCfD1, MCfD2, MCfUsr) also relates to a type (P2TD1, P2TD2) of the at least one home automation device (D1, D2).

7. The method according to claim 6, wherein the recording step (EcfU7) comprises the recording of the at least one type (P2TD1, P2TD2) of the at least one home automation device (D1, D2).

8. A method of controlling a home automation installation (17) comprising at least one home automation device (D1, D2) and at least one central control unit (U), the at least one home automation device (D1, D2) being capable of communicating with the central control unit (U) via at least one first local protocol (P1); the method being executed by the at least one central control unit (U) and comprising the following steps:
- connection (ECUO) between a node (N1) communicating according to a second communication protocol (P2) and the central control unit (U), said central control unit (U) acting as a virtual representative of the at least one home automation device (D1, D2) according to the first protocol (P1);
- reception (ECU1) of at least one control message (P2MC) originating from the node (N1) comprising at least one location identifier (P2AD1, P2AD2), corresponding to a network address, of a home automation device (D1, D2) according to the second target communication protocol (P2) such that the location identifier (P2AD1, P2AD2) is distinct for each home automation device (D1, D2), and at least one definition of a function (P2F1D1, P2F2D1, P2F1D2, P2F2D2) of the home automation device (D1, D2) according to the second communication protocol (P2);
- determination (ECU2) of a location identifier (P1AD1, P1AD2) of the at least one home automation device (D1, D2) according to the first communication protocol corresponding to the location identifier (P2AD1, P2AD2) of the at least one home automation device (D1, D2) according to the second communication protocol (P2)
- application (ECU3) of a function conversion rule (RCFX) arranged to convert the definition of the at least one function (P2F1D1, P2F2D1, P2F1D2, P2F2D2) according to the second target communication protocol (P2) into at least one definition of a function (P1F1D1, P1F2D1, P1F1D2, P1F2D2) according to the first local communication protocol (P1);
- sending (ECU4) of at least one control message (P1MC) to the at least one home automation device (D1, D2) corresponding to the location identifier (P1AD1, P1AD2) and to the function (P1F1D1, P1F2D1, P1F1D2, P1F2D2) according to the first local communication protocol (P1).

9. The control method according to claim 8, further comprising the following steps:
- reception (ECU6) of at least one control return message (RP1MC) originating from the at least one home automation device (D1, D2) according to the first local communication protocol (P1);
- application (ECU7) of a function conversion rule (RCFX) in order to convert a control return information (P1RC) expressed according to the first local communication protocol (P1) into a control return information (P2RC) expressed according to the second target communication protocol (P2);
- sending (ECU8) of at least one control return message (RP2MC) to the at least one node (N1) communicating according to a second communication protocol (P2), the control return message (R2PMC) comprising a control return information (P2RC) according to the second communication target protocol (P2).

10. A method of supervising a home automation installation (17) configured by executing the configuration method according to any one of claims 1 to 7, said method of supervising a home automation installation (17) comprising at least one device home automation (D1, D2) and at least one central control unit (U), the at least one home automation device (D1, D2) being capable of communicating with the central control unit (U) via at least one first local protocol (P1); the method being executed by the at least one central control unit (U) and comprising the following steps:
- reception (ESU2) of a supervision message (P1MS) originating from a home automation device (D1, D2) comprising information relating to a value of at least one state variable (P1S1D1, P1S2D1, P1S1D2, P1S2D2) of the at least one home automation device (D1, D2) according to said first communication protocol (P1);
- application (ESU3) of a state conversion rule (RCSX) in order to convert the at least one information relating to a value of at least one state variable (P1S1D1, P1S2D1, P1S1D2, P1S2D2) of the at least one home automation device (D1, D2) expressed according to the first local communication protocol (P1) into a value of at least one state variable (P2S1D1, P2S2D1, P2S1D2, P2S2D2) of the at least one home automation device (D1, D2) expressed according to the second target communication protocol (P2);
- adaptation (ESU4) of the location identifier (P1AD1, P1AD2) of the at least one home automation device (P1AD1, P1AD2) according to the first communication protocol (P1) into a location identifier (P2AD1, P2AD2), corresponding to a network address, of the at least one home automation device (P2AD1, P2AD2) according to the second target communication protocol (P2) such that the location identifier (P2AD1, P2AD2) is distinct for each home automation device (D1, D2);
- sending (ECU5) of at least one supervision message (P2MS) to at least one node (N1) communicating according to a second communication protocol (P2), the supervision message (P2MS) comprising information relating to a value of at least one state variable (P2S1D1, P2S2D1, P2S1D2, P2S2D2) of the at least one home automation device (D1, D2) according to the second target communication protocol (P2) and in connection with the identifier location (P2AD1, P2AD2) of the at least one home automation device (D1, D2) according to the second communication protocol (P2).

11. The method according to claim 10, wherein the sending step (ECU8) is performed for at least one node (N1) recorded in a list of subscription to an event relating to the at least one state variable (P2S1D1, P2S2D1, P2S1D2, P2S2D2).

12. The method according to any of claims 10 or 11, comprising a step of sending to a home automation device (D1, D2) a request of recording in a list of subscription to an event relating to the at least one state variable (P2S1D1, P2S2D1, P2S1D2, P2S2D2) of the home automation device (D1, D2).
